(19) **Europäisches Patentamt**
**European Patent Office**
**Office européen des brevets**

(11) **EP 4 663 618 A1**

(12) **EUROPEAN PATENT APPLICATION**

(43) Date of publication:
**17.12.2025 Bulletin 2025/51**

(21) Application number: **24181742.8**

(22) Date of filing: **12.06.2024**

(51) International Patent Classification (IPC):
**C04B 26/30** $^{(2006.01)}$

(52) Cooperative Patent Classification (CPC):
(C-Sets available)
**C04B 26/30; C04B 40/0039;** C04B 2111/28

(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Omya International AG**
**4665 Oftringen (CH)**

(72) Inventors:
- **ORLANDO, Fabrizio**
  **5436 Würenlos (CH)**
- **EGGIMANN, Manuel**
  **3014 Bern (CH)**
- **LYS, Thomas**
  **6274 Eschenbach (CH)**
- **DOBBINS, Christopher**
  **8942 Oberrieden (CH)**

(74) Representative: **Maiwald GmbH**
**Elisenhof**
**Elisenstraße 3**
**80335 München (DE)**

(54) **THERMALLY CONDUCTIVE MINERAL BLEND**

(57)    The present invention relates to a thermally conductive magnesium oxide blend, which is composed of at least three different fractions of magnesium oxide fillers, wherein the fillers are in form of particles having a volume median particle size $d_{50}$ from 0.1 to 500 pm. Furthermore, the present invention relates to a polymeric composition comprising the same as well as to the use of said thermally conductive magnesium oxide blend.

**EP 4 663 618 A1**

(52) Cooperative Patent Classification (CPC): (Cont.)

C-Sets
**C04B 26/30, C04B 14/304, C04B 14/28,
C04B 14/327, C04B 14/303, C04B 14/34;
C04B 40/0039, C04B 14/304**

**Description**

The present invention relates to a thermally conductive magnesium oxide blend, a polymeric composition comprising the same, an article comprising said polymeric composition as well as the use of said thermally conductive magnesium oxide blend.

In electronic or electric devices, efficient heat dissipation from the device is indispensable for maintaining or improving device performance as well as achieving a long and reliable service life of the device. A key part of thermal management is to establish and enhance the heat transfer between heterogeneous material interfaces. Typically, thermal interface materials are used to enhance the thermal heat coupling between two components and may be employed, for example, in the form of pastes, adhesives, gap fillers, pads or tapes. For example, a thermal interface material may be inserted between a heat-producing device, e.g. an integrated circuit, battery cells, or lighting device, and a heat-dissipating device such as a heat sink or heat exchanger.

Thermal interface materials can be prepared by a number of known methods and a common approach is to blend thermally conductive fillers into a polymer matrix. Several ceramic materials with a high thermal conductivity such as aluminium nitride, boron nitride, silicon nitride, or silicon carbide have been extensively explored as fillers due to their electrical insulation and stability. Moreover, aluminium oxide is currently among the most commonly used materials for commercial thermally conductive fillers due to its low cost and high electric resistivity. Metals such as aluminium, silver, copper, or nickel are used as fillers when electrical insulation and lightweight are not considered for the applications (see Cui et al., J. Mater. Chem. C, 2020, 8, 10568 -10586).

As technology moves to sustainable energy and transportation, electric mobility is becoming increasingly important. Temperature management also plays a key role for the high-voltage batteries of electric vehicles. Battery cells can only deliver maximum performance within a certain temperature range and must not overheat. Moreover, the heating of modern lithium-ion batteries triggers a thermal reaction, which can swing itself up and cause a fire in the battery or even an explosion. In order to effectively transfer the heat caused by cell operation to the surroundings, a thermal gap filler is applied to the battery tray and the cell units are then installed on the liquid material. Currently, most thermal gap fillers are made from polymers that are filled with aluminium oxide or aluminium hydroxide. Although materials with significantly better thermal conductivity are available such as boron nitride or aluminum nitride, their high costs and the extreme thickening of formulations filled with those fillers makes them unsuitable for high volume automotive applications. Moreover, in order to achieve a sufficiently high thermal conductivity, the level of aluminium oxide or aluminium hydroxide filler within the thermal gap filler needs to be high. This may result in a high viscosity of the gap filler composition, and thus, to a high flow resistance, which undermines cost-efficient and fast production. Moreover, high filler content may severely wear the processing machines by increased abrasion, which, for example, may require to replace dosing machine components more frequently.

WO2004108852 A1 describes a process of making a thermal interface material, wherein a polymeric hot melt pressure sensitive adhesive having a number average molecular weight of greater than 25,000 is melt-blended with at least 25 weight percent of a thermally conductive filler to form a mixture and said mixture is formed into a thermal interface material. A composition comprising a thermally conductive filler, a plasticizer, acrylic acid, and an alkyl(meth)acrylate monomer is described in WO2021006646 A1. WO2022207633 A1 is concerned with a thermally conductive filler composition comprising at least one inorganic aluminium compound and at least one inorganic magnesium compound.

Thus, there is an ongoing need in the art for the development of new thermally conductive filler materials, in particular thermally conductive filler materials which are suitable for high volume production at moderate costs.

Accordingly, it is in object of the present invention to provide a thermally conductive filler composition, which is suitable for high volume production at moderate costs. Furthermore, it would be desirable to provide a thermally conductive filler composition, wherein the particle size and morphology can be tailored and adapted to the envisaged application. It would also be desirable to provide a thermally conductive filler composition which exhibits a low rheology when blended with polymers, especially when blended at high filler concentrations. Furthermore, it would be desirable to provide a thermally conductive filler composition having a reduced abrasiveness.

It is also an object of the present invention to provide a thermally conductive filler composition which enhances the thermal conductivity of polymers and provides efficient heat dissipation. Furthermore, it would be desirable that the thermally conductive filler composition does not negatively affect the processability of polymeric materials filled with said composition. It would also be desirable to provide a thermally conductive filler composition, wherein the fillers are at least partially derivable from natural sources, are environmentally benign and inexpensive.

The foregoing and other objects are solved by the subject-matter as defined in the independent claims.

According to one aspect of the present invention, a thermally conductive magnesium oxide blend is provided, which is composed of at least three different fractions of magnesium oxide fillers, wherein the fillers are in form of particles having a volume median particle size $d_{50}$ from 0.1 to 500 $\mu$m.

According to a further aspect of the present invention, a polymeric composition comprising at least one polymer and a thermally conductive magnesium oxide blend according to the present invention is provided.

According to still a further aspect of the present invention, an article comprising the polymeric composition according to the present invention is provided, wherein the article is an electrical component, an electronic component, an automotive component, an aerospace component, a railway component, a maritime component, a medical component, a heat dissipating device, or a non-woven material, preferably an automotive power electrical component, an aerospace power electrical component, a railway power electrical component, a maritime power electrical component, a home energy storage device, a battery, a battery cell, a battery module, an integrated circuit, a light emitting diode, a lamp socket, a semiconductor package, a cooling fan, a connector, a switch, a case, a housing, an adhesive tape, an adhesive pad, an adhesive sheet, a vibration damping article, a gasket, a spacer, a sealant, a heat sink, or a heat spreader

According to still a further aspect, use of a thermally conductive magnesium oxide blend according to the present invention as a thermal conductivity enhancer for a polymeric composition is provided.

According to still a further aspect, use of a thermally conductive magnesium oxide blend according to the present invention in aerospace applications, automotive applications, railway applications, maritime applications, electronic applications, electric vehicle applications, battery applications, or medical applications is provided.

Advantageous embodiments of the present invention are defined in the corresponding subclaims.

According to one embodiment the magnesium oxide blend comprises a first magnesium oxide filler fraction A having a volume median particle size $d_{50}(A)$, a second magnesium oxide filler fraction B having a volume median particle size $d_{50}(B)$, and a third magnesium oxide filler fraction C having a volume median particle size $d_{50}(C)$, wherein $d_{50}(A)$ is greater than $d_{50}(B)$, and $d_{50}(A)$ differs from $d_{50}(B)$ by at least 10%, and $d_{50}(C)$ is smaller than $d_{50}(B)$, and $d_{50}(C)$ differs from $d_{50}(B)$ by at least 10%.

According to one embodiment the filler particles of the magnesium oxide blend have an overall particle size distribution that satisfies the following equation (1):

$$U(d_x) = 100 \frac{d_x^n - d_2^n}{d_{98}^n - d_2^n} \qquad (1)$$

wherein $U(d_x)$ is the cumulative percentage of filler particles having the particle size $d_x$, $d_{98}$ is the top cut particle size of the filler particles, $d_2$ is the minimum particle size of the filler particles, and n = 0.3 - 0.45, preferably n = 0.34 - 0.4, more preferably n = 0.35 - 0.39, even more preferably n = 0.36 - 0.38, and most preferably n = 0.37. According to a further embodiment the volume median particle size $d_{50}$ of the filler particles of the magnesium oxide blend satisfies the following equation (2):

$$d_{50} = \sqrt[n]{0.5(d_{98}^n - d_2^n) + d_2^n} \qquad (2)$$

wherein $d_{98}$ is the top cut particle size of the filler particles, $d_2$ is the minimum particle size of the filler particles, and n = 0.3 - 0.45, preferably n = 0.34 - 0.4, more preferably n = 0.35 - 0.39, even more preferably n = 0.36 - 0.38, and most preferably n = 0.37.

According to one embodiment the filler particles of the magnesium oxide blend have a volume median particle size $d_{50}$ from 0.5 to 450 $\mu$m, preferably from 1 to 400 $\mu$m, more preferably from 1.5 to 300 $\mu$m, and most preferably from 2 to 250 $\mu$m, and/or a volume minimum particle size $d_2$ from 0.01 to 5 $\mu$m, preferably from 0.1 to 4 $\mu$m, more preferably from 0.5 to 3 $\mu$m, and most preferably from 1 to 2 $\mu$m, and/or a volume top cut particle size $d_{98}$ from 10 to 1000 $\mu$m, preferably from 50 to 750 $\mu$m, more preferably from 100 to 500 $\mu$m, and most preferably from 150 to 250 $\mu$m. According to a further embodiment the magnesium oxide is selected from the group consisting of natural magnesium oxide, synthetic magnesium oxide, caustic calcined magnesia, hard burned magnesia, dead burned magnesia, sintered magnesia, fused magnesia, or a mixture thereof, preferably the magnesium oxide is selected from hard burned magnesia and/or dead burned magnesia, and most preferably the magnesium oxide is dead burned magnesia.

According to one embodiment the magnesium oxide filler particles are at least partially surface-treated with a surface-treatment agent, preferably the surface-treatment agent is selected from the group consisting of aliphatic carboxylic acid having a total amount of carbon atoms from C4 to C24, mono-substituted succinic anhydride consisting of succinic anhydride mono-substituted with a group selected from a linear, branched, aliphatic and cyclic group having a total amount of carbon atoms from C2 to C30 in the substituent, phosphoric acid ester blend of one or more phosphoric acid mono-ester and one or more phosphoric di-ester, paraffin oil, a silane, organic titanate, organic zirconate, and mixtures thereof, more preferably the surface-treatment agent is selected from the group consisting of aliphatic carboxylic acids having a total amount of carbon atoms from C4 to C24, triethoxysilane, trimethoxysilane, and mixtures thereof, and most preferably the surface-treatment agent is selected from a mixture of stearic acid and palmitic acid and/or hexadecyltrimethoxysilane.

According to one embodiment the magnesium oxide blend comprises the first magnesium oxide filler fraction A in an amount from 1 to 66 vol.-%, based on the total volume of the filler composition, preferably from 2 to 50 vol.-%, more preferably from 5 to 40 vol.-%, and most preferably from 10 to 35 vol.-%, the second magnesium oxide filler fraction B in an amount from 1 to 66 vol.-%, based on the total volume of the filler composition, preferably from 2 to 50 vol.-%, more preferably from 5 to 40 vol.-%, and most preferably from 10 to 35 vol.-%, and the third magnesium oxide filler fraction C in an amount from 1 to 66 vol.-%, based on the total volume of the filler composition, preferably from 2 to 50 vol.-%, more preferably from 5 to 40 vol.-%, and most preferably from 10 to 35 vol.-%.

According to one embodiment the polymeric composition comprises the thermally conductive magnesium oxide blend in an amount of at least 50 vol.-%, based on the total volume of the polymeric composition, preferably in an amount of at least 60 vol.-%, more preferably in an amount of at least 70 vol.-%, and most preferably in an amount of at least 80 vol.-%, and/or wherein the polymeric composition has a thermal conductivity of at least 0.75 W/m·K, preferably at least 1 W/m·K, more preferably at least 1.2 W/m K, and most preferably at least 1.5 W/m K, wherein the thermal conductivity is determined with a Hot Disk TPS 1000 thermal constants analyser equipped with a Kapton-insulated sensor with 2 mm radius. According to a further embodiment the at least one polymer is a resin, a thermoplastic polymer, an elastomer, or a mixture thereof, preferably the at least one polymer is selected from the group consisting of an epoxy resin, an acrylic resin, an urethane resin, a silicone resin, a phenolic resin, homopolymer and/or copolymer of polyolefin, polyamide, polystyrene, polyacrylate, polyvinyl, polyurethane, silane-modified polymer, halogen-containing polymer, polyester, polycarbonate, acrylic rubber, butadiene rubber, acrylonitrile-butadiene rubber, epichlorohydrin rubber, isoprene rubber, ethylene-propylene rubber, ethylene-propylene-diene rubber, nitrile-butadiene rubber, butyl rubber, styrene-butadiene rubber, polyisoprene, hydrogenated nitrile-butadiene rubber, carboxylated nitrile-butadiene rubber, chloroprene rubber, isoprene isobutylene rubber, chloro-isobutene-isoprene rubber, brominated isobutene-isoprene rubber, silicone rubber, fluorocarbon rubber, polyurethane rubber, polysulfide rubber, thermoplastic rubber, and mixtures thereof.

According to one embodiment the polymeric composition comprises at least one additional filler, preferably selected from the group consisting of calcium carbonate, calcium oxide, calcium hydroxide, aluminium hydroxide, aluminium oxide, aluminium nitride, talc, zinc oxide, boron nitride, graphite, metallic fillers, and mixtures thereof. According to a further embodiment the polymeric composition is a thermally conductive masterbatch, a thermally conductive grease, a thermally conductive moldable composition, a thermally conductive extrudable composition, a thermally conductive gap filler, a thermally conductive adhesive, a thermally conductive gel, a thermally conductive potting compound, a thermally conductive encapsulation agent, a thermally conductive sealant, or a thermally conductive paste, preferably the polymeric composition is a thermally conductive gap filler, a thermally conductive adhesive, or a thermally conductive sealant.

It should be understood that for the purpose of the present invention, the following terms have the following meaning:

"Natural ground calcium carbonate" (GCC) in the meaning of the present invention is a calcium carbonate obtained from natural sources, such as limestone, marble, or chalk, and processed through a wet and/or dry treatment such as grinding, screening and/or fractionating, for example, by a cyclone or classifier.

"Precipitated calcium carbonate" (PCC) in the meaning of the present invention is a synthesised material, obtained by precipitation following reaction of carbon dioxide and lime in an aqueous, semi-dry or humid environment or by precipitation of a calcium and carbonate ion source in water. PCC may be in the vateritic, calcitic or aragonitic crystal form. PCCs are described, for example, in EP2447213 A1, EP2524898 A1, EP2371766 A1, EP1712597 A1, EP1712523 A1, or WO2013142473 A1.

The "particle size" of fillers herein is described as volume-based particle size distribution. The volume median particle size $d_{50}(vol)$ or the volume top cut particle size $d_{98}(vol)$, measured using a Malvern Mastersizer 2000 or 3000 Laser Diffraction System, indicates a diameter value such that 50% or 98% by volume, respectively, of the particles have a diameter of less than this value. The volume minimum particle size $d_2(vol)$, the volume particle size $d_{10}(vol)$, or the volume particle size $d_{90}(vol)$, respectively, measured using a Malvern Mastersizer 2000 or 3000 Laser Diffraction System, indicates a diameter value such that 2%, 10% or 90% by volume, respectively, of the particles have a diameter of less than this value. The raw data obtained by the measurement are analysed using the Mie theory, with a particle refractive index of 1.57 and an absorption index of 0.005 for calcium carbonate particles, and a particle refractive index of 1.74 and an absorption index of 0.1 for magnesium oxide particles.

As used herein the term "polymer" generally includes homopolymers and co-polymers such as, for example, block, graft, random and alternating copolymers, as well as blends and modifications thereof. The polymer can be an amorphous polymer, a crystalline polymer, or a semi-crystalline polymer, i.e. a polymer comprising crystalline and amorphous fractions. The degree of crystallinity is specified in percent and can be determined by differential scanning calorimetry (DSC). An amorphous polymer may be characterized by its glass transition temperature and a crystalline polymer may be characterized by its melting point. A semi-crystalline polymer may be characterized by its glass transition temperature and/or its melting point.

The term "copolymer" as used herein refers to a polymer derived from more than one species of monomer. Copolymers that are obtained by copolymerization of two monomer species may also be termed bipolymers, those obtained from three monomers terpolymers, those obtained from four monomers quaterpolymers, etc. (cf. IUPAC Compendium of Chemical Terminology 2014, "copolymer"). Accordingly, the term "homopolymer" refers to a polymer derived from one species of monomer.

The term "glass transition temperature" in the meaning of the present invention refers to the temperature at which the glass transition occurs, which is a reversible transition in amorphous materials (or in amorphous regions within semi-crystalline materials) from a hard and relatively brittle state into a molten or rubber-like state. The glass-transition temperature is always lower than the melting point of the crystalline state of the material, if one exists. The term "melting point" in the meaning of the present invention refers to the temperature at which a solid changes state from solid to liquid at atmospheric pressure. At the melting point the solid and liquid phase exist in equilibrium. Glass-transition temperature and melting point are determined by ISO 11357 with a heating rate of 10°C/min.

Unless indicated otherwise, the "moisture content" of a material refers to the percentage of moisture (i.e. water) which may be desorbed from a sample upon heating to 220 °C. The moisture content may be measured according to the Karl Fischer coulometric titration method, desorbing the moisture in an oven at 220 °C for at least 10 min and passing it continuously into a Karl Fischer coulometer (Mettler Toledo coulometric KF Titrator C30, combined with Mettler Toledo oven DO 0337) using dry nitrogen at 100 ml/min for at least 10 min. A calibration curve using water may be recorded and a blank of 10 min nitrogen flow without a sample taken into account.

The term "moisture pick-up susceptibility" in the meaning of the present invention refers to the amount of moisture adsorbed on the surface of a dry powder material and can be determined in mg moisture/g of the dry powder material after exposure to an atmosphere of 10 and 85 % of relative humidity, respectively, for 2.5 hours at a temperature of +23°C ($\pm$ 2°C).

The term "surface-treated filler" in the meaning of the present invention refers to a filler which has been contacted with a surface-treatment agent such as to obtain a coating layer on at least a part of the surface of the filler.

The "specific surface area" (expressed in $m^2/g$) of a material as used throughout the present document can be determined by the Brunauer Emmett Teller (BET) method with nitrogen as adsorbing gas and by use of an ASAP 2460 instrument from Micromeritics. The method is well known to the skilled person and defined in ISO 9277:2010. Samples are conditioned at 100°C under vacuum for a period of 30 min prior to measurement. The total surface area (in $m^2$) of said material can be obtained by multiplication of the specific surface area (in $m^2/g$) and the mass (in g) of the material.

A "solution" as referred to herein is understood to be a single phase mixture of a specific solvent and a specific solute, for example a single phase mixture of a water-soluble salt and water. The term "dissolved" as used herein thus refers to the physical state of a solute in a solution.

A "suspension" or "slurry" in the meaning of the present invention comprises undissolved solids and water, and optionally further additives, and usually contains large amounts of solids and, thus, is more viscous and can be of higher density than the liquid from which it is formed.

For the purpose of the present invention, the term "viscosity" refers to the rheological properties of the liquid samples determined using an Anthon Paar Physica MCR301 rheometer, equipped with a parallel plate geometry. The viscosity may be measured according to the procedure described in the experimental section below.

Where an indefinite or definite article is used when referring to a singular noun, e.g., "a", "an" or "the", this includes a plural of that noun unless anything else is specifically stated.

Where the term "comprising" is used in the present description and claims, it does not exclude other elements. For the purposes of the present invention, the term "consisting of" is considered to be a preferred embodiment of the term "comprising". If hereinafter a group is defined to comprise at least a certain number of embodiments, this is also to be understood to disclose a group, which preferably consists only of these embodiments.

Terms like "obtainable" or "definable" and "obtained" or "defined" are used interchangeably. This, for example, means that, unless the context clearly dictates otherwise, the term "obtained" does not mean to indicate that, for example, an embodiment must be obtained by, for example, the sequence of steps following the term "obtained" though such a limited understanding is always included by the terms "obtained" or "defined" as a preferred embodiment.

Whenever the terms "including" or "having" are used, these terms are meant to be equivalent to "comprising" as defined hereinabove.

According to the present invention, a thermally conductive magnesium oxide blend is provided. The magnesium oxide blend is composed of at least three different fractions of magnesium oxide fillers, wherein the fillers are in form of particles having a volume median particle size $d_{50}$ from 0.1 to 500 $\mu$m.

In the following details and preferred embodiments of the inventive composition will be set out in more details. It is to be understood that these technical details and embodiments also apply to the inventive method, uses, and products containing the inventive composition.

**Thermally conductive magnesium oxide blend**

The thermally conductive magnesium oxide blend according to the present invention is composed of at least three different fractions of magnesium oxide fillers.

Magnesium oxide for industrial use is typically obtained from mining and extracting from magnesium-rich minerals or from water sources such as oceans, salt lakes, or groundwater salines. Depending on the source of origin and the production method, the magnesium oxide may comprise impurities such as magnesium hydroxide or oxides of calcium, iron, silicon, sodium, manganese, chloride, boron, or aluminium. Said impurities may be present in an amount of 10 wt.-% or less, based on the total weight of the magnesium oxide.

According to one embodiment, the magnesium oxide included in the thermally conductive magnesium oxide blend has a purity of at least 90 wt.-%, of at least 94 wt.-%, of at least 96 wt.-%, of at least 98 wt.-%, or of at least 99 wt.-%, based on the total weight of the magnesium oxide. The purity may be tested by any suitable technique known in the art such as X-ray fluorescence (XRF), inductively coupled plasma (ICP) analysis, or atomic absorption spectroscopy (AAS).

The inventors found that the thermally conductive magnesium oxide blend of the present invention does not require high-purity magnesium oxide, which may be expensive and energy intensive to produce. According to one embodiment, the magnesium oxide included in the thermally conductive magnesium oxide blend has a purity from 90 to 99 wt.-%, preferably from 90 to 98 wt.-%, more preferably from 90 to 96 wt.-%, and most preferably from 90 to 94 wt.-%, based on the total weight of the magnesium oxide.

For the purpose of the present invention, the term "magnesium oxide" also comprises magnesium oxide grades that have been further processed such as caustic calcined magnesia, hard burned magnesia, dead burned magnesia, sintered magnesia, or fused magnesia. Calcining magnesium oxide at lower temperature (700 to 1000°C) produces light-burned magnesia, a reactive form, which is also known as caustic calcined magnesia. Hard-burned magnesia, which has limited reactivity, is produced at calcining temperatures from 1000 to 1500°C. Dead-burned magnesia is a low reactive magnesium oxide, which has been subjected to high temperatures from 1500 to 2000°C to diminish the available surface area. Fused magnesia is produced at temperatures above the fusion point of magnesium oxide (2800°C) and is an unreactive grade of magnesium oxide.

According to one embodiment the magnesium oxide is selected from the group consisting of natural magnesium oxide, synthetic magnesium oxide, caustic calcined magnesia, hard burned magnesia, dead burned magnesia, sintered magnesia, fused magnesia, or a mixture thereof, preferably the magnesium oxide is selected from hard burned magnesia and/or dead burned magnesia, and most preferably the magnesium oxide is dead burned magnesia.

The magnesium oxide fillers are in form of particles having a volume median particle size $d_{50}$ from 0.1 to 500 $\mu$m. According to one embodiment, the magnesium oxide fillers are in form of particles having volume median particle size $d_{50}$ from 0.5 to 450 $\mu$m, preferably from 1 to 400 $\mu$m, more preferably from 1.5 to 300 $\mu$m, and most preferably from 2 to 250 $\mu$m. In addition or alternatively, the magnesium oxide fillers may have a volume minimum particle size $d_2$ from 0.01 to 55 $\mu$m, preferably from 0.1 to 10 $\mu$m, more preferably from 0.5 to 5 $\mu$m, and most preferably from 1 to 2 $\mu$m. In addition or alternatively, the magnesium oxide fillers may have a volume top cut particle size $d_{98}$ from 10 to 1000 $\mu$m, preferably from 50 to 750 $\mu$m, more preferably from 100 to 500 $\mu$m, and most preferably from 150 to 250 $\mu$m.

In addition or alternatively, the magnesium oxide fillers may have a volume particle size $d_{10}$ from 0.02 to 10 $\mu$m, preferably from 0.2 to 8 $\mu$m, more preferably from 1 to 6 $\mu$m, and most preferably from 2 to 4 $\mu$m. In addition or alternatively, the magnesium oxide fillers may have a volume particle size $d_{90}$ from 7 to 700 $\mu$m, preferably from 35 to 550 $\mu$m, more preferably from 70 to 350 $\mu$m, and most preferably from 100 to 180 $\mu$m.

According to one embodiment the filler particles of the magnesium oxide blend have a volume median particle size $d_{50}$ from 0.5 to 450 $\mu$m, preferably from 1 to 400 $\mu$m, more preferably from 1.5 to 300 $\mu$m, and most preferably from 2 to 250 $\mu$m, and a volume minimum particle size $d_2$ from 0.01 to 55 $\mu$m, preferably from 0.1 to 10 $\mu$m, more preferably from 0.5 to 5 $\mu$m, and most preferably from 1 to 2 $\mu$m, and a volume top cut particle size $d_{98}$ from 10 to 1000 $\mu$m, preferably from 50 to 750 $\mu$m, more preferably from 100 to 500 $\mu$m, and most preferably from 150 to 250 $\mu$m.

According to a further embodiment the filler particles of the magnesium oxide blend have a volume median particle size $d_{50}$ from 0.5 to 450 $\mu$m, preferably from 1 to 400 $\mu$m, more preferably from 1.5 to 300 $\mu$m, and most preferably from 2 to 250 $\mu$m, and a volume particle size $d_{10}$ from 0.02 to 10 $\mu$m, preferably from 0.2 to 8 $\mu$m, more preferably from 1 to 6 $\mu$m, and most preferably from 2 to 4 $\mu$m, and a volume particle size $d_{90}$ from 7 to 700 $\mu$m, preferably from 35 to 550 $\mu$m, more preferably from 70 to 350 $\mu$m, and most preferably from 100 to 180 $\mu$m.

According to still a further embodiment the filler particles of the magnesium oxide blend have a volume median particle size $d_{50}$ from 0.5 to 450 $\mu$m, preferably from 1 to 400 $\mu$m, more preferably from 1.5 to 300 $\mu$m, and most preferably from 2 to 250 $\mu$m, and a volume particle size $d_{10}$ from 0.02 to 10 $\mu$m, preferably from 0.2 to 8 $\mu$m, more preferably from 1 to 6 $\mu$m, and most preferably from 2 to 4 $\mu$m, and a volume top cut particle size $d_{98}$ from 10 to 1000 $\mu$m, preferably from 50 to 750 $\mu$m, more preferably from 100 to 500 $\mu$m, and most preferably from 150 to 250 $\mu$m.

According to the present invention, the thermally conductive oxide blend is composed of at least three different fractions of magnesium oxide fillers. These fractions differ from each other with respect to their particle size distribution, i.e. each fraction has a defined particle sized distribution, which may be expressed by the volume minimum particle size $d_2$, volume particle size $d_{10}$, volume median particle size $d_{50}$, volume particle size $d_{90}$, and/or volume top cut particle size $d_{98}$.

Thus, the magnesium oxide blend may be a mixture of a coarse filler fraction, a medium filler fraction, and a fine filler fraction.

According to one embodiment, the magnesium oxide blend comprises a first magnesium oxide filler fraction A having a volume median particle size $d_{50}$(A), a second magnesium oxide filler fraction B having a volume median particle size $d_{50}$(B), and a third magnesium oxide filler fraction C having a volume median particle size $d_{50}$(C), wherein $d_{50}$(A) is greater than $d_{50}$(B), and $d_{50}$(A) differs from $d_{50}$(B) by at least 10%, and $d_{50}$(C) is smaller than $d_{50}$(B), and $d_{50}$(C) differs from $d_{50}$(B) by at least 10%.

According to one embodiment $d_{50}$(A) differs from $d_{50}$(B) by at least 15%, preferably by at least 20%, more preferably by at least 25%, and most preferably by at least 30%, and/or $d_{50}$(C) differs from $d_{50}$(B) by at least 15%, preferably by at least 20%, more preferably by at least 25%, and most preferably by at least 30%. According to another embodiment $d_{50}$(A) differs from $d_{50}$(B) by at least 40%, preferably by at least 80%, more preferably by at least 150%, and most preferably by at least 200%, and/or $d_{50}$(C) differs from $d_{50}$(B) by at least 40%, preferably by at least 80%, more preferably by at least 150%, and most preferably by at least 200%.

According to still another embodiment $d_{50}$(A) differs from $d_{50}$(B) by at least 10 $\mu$m, preferably by at least 20 $\mu$m, more preferably by at least 30 $\mu$m, and most preferably by at least 40 $\mu$m, and/or $d_{50}$(C) differs from $d_{50}$(B) by at least 10 $\mu$m, preferably by at least 20 $\mu$m, more preferably by at least 30 $\mu$m, and most preferably by at least 40 $\mu$m.

In order to obtain the desired overall particle size distribution, the magnesium oxide filler particles of the individual fractions may be ground and/or sieved. Suitable methods are known in the art.

According to one embodiment, the first magnesium oxide filler fraction A has a volume median particle size $d_{50}$(A) from 0.5 to 500 $\mu$m, preferably from 1 to 400 $\mu$m, more preferably from 1.5 to 300 $\mu$m, and most preferably from 2 to 250 $\mu$m, the second magnesium oxide filler fraction B has a volume median particle size $d_{50}$(B) from 0.5 to 500 $\mu$m, preferably from 1 to 400 $\mu$m, more preferably from 1.5 to 300 $\mu$m, and most preferably from 2 to 250 $\mu$m, and the third magnesium oxide filler fraction C has a volume median particle size $d_{50}$(C) from 0.5 to 500 $\mu$m, preferably from 1 to 400 $\mu$m, more preferably from 1.5 to 300 $\mu$m, and most preferably from 2 to 250 $\mu$m. In addition or alternatively, the first magnesium oxide filler fraction A may have a volume minimum particle size $d_2$(A) from 0.01 to 55 $\mu$m, preferably from 0.1 to 10 $\mu$m, more preferably from 0.5 to 5 $\mu$m, and most preferably from 1 to 2 $\mu$m, the second magnesium oxide filler fraction B has a volume minimum particle size $d_2$(B) from 0.01 to 5 $\mu$m, preferably from 0.1 to 4 $\mu$m, more preferably from 0.5 to 3 $\mu$m, and most preferably from 1 to 2 $\mu$m, and the third magnesium oxide filler fraction C has a volume minimum particle size $d_2$(C) from 0.01 to 5 $\mu$m, preferably from 0.1 to 4 $\mu$m, more preferably from 0.5 to 3 $\mu$m, and most preferably from 1 to 2 $\mu$m. In addition or alternatively, the first magnesium oxide filler fraction A may have a volume particle size $d_{10}$(A) from 0.02 to 10 $\mu$m, preferably from 0.2 to 8 $\mu$m, more preferably from 1 to 6 $\mu$m, and most preferably from 2 to 4 $\mu$m, the second magnesium oxide filler fraction B has a volume particle size $d_{10}$(B) from 0.02 to 10 $\mu$m, preferably from 0.2 to 8 $\mu$m, more preferably from 1 to 6 $\mu$m, and most preferably from 2 to 4 $\mu$m, and the third magnesium oxide filler fraction C has a volume particle size $d_{10}$(C) from 0.02 to 10 $\mu$m, preferably from 0.2 to 8 $\mu$m, more preferably from 1 to 6 $\mu$m, and most preferably from 2 to 4 $\mu$m. In addition or alternatively, the first magnesium oxide filler fraction A may have a volume particle size $d_{90}$(A) from 7 to 700 $\mu$m, preferably from 35 to 550 $\mu$m, more preferably from 70 to 350 $\mu$m, and most preferably from 100 to 180 $\mu$m, the second magnesium oxide filler fraction B has a volume particle size $d_{90}$(B) from 7 to 700 $\mu$m, preferably from 35 to 550 $\mu$m, more preferably from 70 to 350 $\mu$m, and most preferably from 100 to 180 $\mu$m, and the third magnesium oxide filler fraction C has a volume particle size $d_{90}$(C) from 7 to 700 $\mu$m, preferably from 35 to 550 $\mu$m, more preferably from 70 to 350 $\mu$m, and most preferably from 100 to 180 $\mu$m. In addition or alternatively, the first magnesium oxide filler fraction A may have a volume top cut particle size $d_{98}$(A) from 10 to 1000 $\mu$m, preferably from 50 to 750 $\mu$m, more preferably from 100 to 500 $\mu$m, and most preferably from 150 to 250 $\mu$m, the second magnesium oxide filler fraction B has a volume top cut particle size $d_{98}$(B) from 10 to 1000 $\mu$m, preferably from 50 to 750 $\mu$m, more preferably from 100 to 500 $\mu$m, and most preferably from 150 to 250 $\mu$m, and the third magnesium oxide filler fraction C has a volume top cut particle size $d_{98}$(C) from 10 to 1000 $\mu$m, preferably from 50 to 750 $\mu$m, more preferably from 100 to 500 $\mu$m, and most preferably from 150 to 250 $\mu$m.

The skilled person will appreciate that the overall particle size distribution of the magnesium oxide blend being composed of at least three different fractions of magnesium oxide fillers is the sum of the individual particle size distribution curves of the magnesium oxide filler fractions.

Depending on the difference between $d_{50}$(A), $d_{50}$(B), and $d_{50}$(C) and the weight ratio between the first magnesium oxide filler fraction A, the second magnesium oxide filler fraction B, and the third magnesium oxide filler fraction C, the overall particles size distribution curve of the mixture of fillers may exhibit at least three peaks. According to a preferred embodiment of the present invention, the overall particle size distribution curve of the thermally conductive magnesium oxide blend being composed of the particle size distribution curve of the first magnesium oxide filler fraction A, the particle size distribution curve of the second magnesium oxide filler fraction B, and the particle size distribution curve of the third magnesium oxide filler fraction C results in a trimodal particle size distribution curve.

It was found by the inventors of the present invention that the thermal conductivity of a polymeric composition comprising the inventive magnesium oxide blend can be significantly improved if the at least three different fractions of magnesium oxide fillers are selected such that the sum of their individual particle size distributions (i.e. the overall particle size distribution of the magnesium oxide blend) follows the closest packing model developed by Dinger and Funk.

According to one embodiment the filler particles of the magnesium oxide blend have an overall particle size distribution that satisfies the following equation (1):

$$U(d_x) = 100 \frac{d_x^n - d_2^n}{d_{98}^n - d_2^n} \qquad (1)$$

wherein $U(d_x)$ is the cumulative percentage of filler particles having the particle size $d_x$,

$d_{98}$ is the top cut particle size of the filler particles,

$d_2$ is the minimum particle size of the filler particles, and

n = 0.3 - 0.45, preferably n = 0.34 - 0.4, more preferably n = 0.35 - 0.39, even more preferably n= 0.36 - 0.38, and most preferably n = 0.37.

n is a distribution coefficient and a measure for the packing density of the magnesium oxide fillers. The lower n, the lower the packing density. The inventors of the present invention found that good filler packing density is achieved if n is between 0.3 and 0.45, preferably between 0.34 and 0.4, more preferably between 0.35 and 0.39, and even more preferably between 0.36 and 0.38. Maximum packing density would be achieved at a distribution coefficient of about 0.37.

According to one embodiment, the deviation of the overall particle size distribution from the equation (1) is determined by a least-square fit algorithm, wherein the R-squared value is greater than 0.7, preferably greater than 0.8, more preferably greater than 0.85, even more preferably greater than 0.9, and most preferably greater than 0.95.

According to a further embodiment, the volume median particle size $d_{50}$ of the filler particles of the magnesium oxide blend (i.e. the volume median particle size $d_{50}$ of the overall particle size distribution) satisfies the following equation (2):

$$d_{50} = \sqrt[n]{0.5(d_{98}^n - d_2^n) + d_2^n} \qquad (2)$$

wherein $d_{98}$ is the top cut particle size of the filler particles,

$d_2$ is the minimum particle size of the filler particles, and

n = 0.3 - 0.45, preferably n = 0.34 - 0.4, more preferably n = 0.35 - 0.39, even more preferably n= 0.36 - 0.38, and most preferably n = 0.37.

Suitable methods to determine if the overall particle size distribution of filler particles satisfies equation (1) are known to the skilled person. For example, the overall particle size distribution of the magnesium oxide blend may be measured with a Malvern Mastersizer 2000 or 3000 Laser Diffraction System, and subsequently, equation (1) may be fitted to the obtained particle size distribution using a suitable software tool.

According to one embodiment, the fillers have a specific surface area of from 0.1 m²/g to 150 m²/g, preferably from 0.5 m²/g to 100 m²/g, and more preferably from 0.8 m²/g to 75 m²/g, measured using nitrogen and the BET method.

According to one embodiment the magnesium oxide blend comprises the first magnesium oxide filler fraction A in an amount from 1 to 66 vol.-%, based on the total volume of the filler composition, preferably from 2 to 50 vol.-%, more preferably from 5 to 40 vol.-%, and most preferably from 10 to 35 vol.-%, the second magnesium oxide filler fraction B in an amount from 1 to 66 vol.-%, based on the total volume of the filler composition, preferably from 2 to 50 vol.-%, more preferably from 5 to 40 vol.-%, and most preferably from 10 to 35 vol.-%, and the third magnesium oxide filler fraction C in an amount from 1 to 66 vol.-%, based on the total volume of the filler composition, preferably from 2 to 50 vol.-%, more preferably from 5 to 40 vol.-%, and most preferably from 10 to 35 vol.-%.

According to a preferred embodiment the magnesium oxide blend comprises the first magnesium oxide filler fraction A in an amount from 10 to 45 vol.-%, based on the total volume of the filler composition, preferably from 30 to 40 vol.-%, the second magnesium oxide filler fraction B in an amount from 1 to 20 vol.-%, based on the total volume of the filler composition, preferably from 10 to 15 vol.-%, and the third magnesium oxide filler fraction C in an amount from 10 to 45 vol.-%, based on the total volume of the filler composition, preferably from 30 to 40 vol.-%. In addition, the first magnesium oxide filler fraction A may have a volume median particle size $d_{50}$(A) from 100 to 150 μm, preferably from 110 to 130 μm, the second magnesium oxide filler fraction B may have a volume median particle size $d_{50}$(B) from 50 to 100 μm, preferably from 70 to 90 μm, and the third magnesium oxide filler fraction C may have a volume median particle size $d_{50}$(C) from 1 to 20 μm, preferably from 5 to 15 μm. In addition, the first magnesium oxide filler fraction A may have a volume top cut particle size $d_{98}$(A) from 210 to 250 μm, preferably from 230 to 240 μm, the second magnesium oxide filler fraction B may have a volume top cut particle size $d_{98}$(B) from 180 to 220 μm, preferably from 200 to 210 μm, and the third magnesium oxide filler fraction C may have a volume top cut particle size $d_{98}$(C) from 20 to 60 μm, preferably from 40 to 50 μm. In addition, the first magnesium oxide filler fraction A may have a volume minimum particle size $d_2$(A) from 0.01 to 55 μm, preferably from 0.1 to 10 μm, the second magnesium oxide filler fraction B may have a volume minimum particle size $d_2$(B) from 0.1 to 10 μm, preferably from 0.5 to 5 μm, and the third magnesium oxide filler fraction C may have a volume minimum particle size $d_2$(C) from 0.5 to 5 μm, preferably from 1 to 2 μm. In addition, the first magnesium oxide filler fraction A may have a volume particle size $d_{90}$(A) from 70 to 350 μm, preferably from 150 to 250 μm, the second magnesium oxide filler fraction B may have a volume particle size $d_{90}$(B) from 100 to 180 $\mu$m, preferably from 120 to 160 $\mu$m, and the third magnesium oxide filler fraction C may have a volume particle size $d_{90}$(C) from 7 to 180 $\mu$m, preferably from 10 to 50 $\mu$m. In addition, the magnesium oxide may be dead burned magnesia.

According to an exemplary embodiment, the magnesium oxide blend comprises the first magnesium oxide filler fraction A in an amount from 30 to 40 vol.-%, based on the total volume of the filler composition, the second magnesium oxide filler fraction B in an amount from 10 to 15 vol.-%, based on the total volume of the filler composition, and the third magnesium oxide filler fraction C in an amount from 30 to 40 vol.-%, based on the total volume of the filler composition, wherein

the first magnesium oxide filler fraction A has a volume median particle size $d_{50}$(A) from 110 to 130 $\mu$m, the second magnesium oxide filler fraction B has a volume median particle size $d_{50}$(B) from 70 to 90 $\mu$m, and the third magnesium oxide filler fraction C has a volume median particle size $d_{50}$(C) from 5 to 15 $\mu$m, the first magnesium oxide filler fraction A has a volume minimum particle size $d_2$(A) from 0.01 to 55 $\mu$m, the second magnesium oxide filler fraction B has a volume minimum particle size $d_2$(B) from 0.5 to 5 $\mu$m, and the third magnesium oxide filler fraction C has a volume minimum particle size $d_2$(C) from 0.01 to 2 $\mu$m, the first magnesium oxide filler fraction A has a volume particle size $d_{90}$(A) from 150 to 250 $\mu$m, the second magnesium oxide filler fraction B has a volume particle size $d_{90}$(B) from 120 to 160 $\mu$m, and the third magnesium oxide filler fraction C has a volume particle size $d_{90}$(C) from 10 to 50 $\mu$m, and the first magnesium oxide filler fraction A has a volume top cut particle size $d_{98}$(A) from 230 to 240 $\mu$m, the second magnesium oxide filler fraction B has a volume top cut particle size $d_{98}$(B) from 200 to 210 $\mu$m, and the third magnesium oxide filler fraction C has a volume top cut particle size $d_{98}$(C) from 40 to 50 $\mu$m.

For gap filler applications, the skilled person may adapt the volume top cut particle size $d_{98}$ of the coarse magnesium oxide fraction, i.e. the first magnesium oxide filler fraction A, to the envisaged gap size. According to one embodiment, the first magnesium oxide filler fraction A may have a volume top cut particle size $d_{98}$(A) of about 1/3 of the gap width. In electric applications, for examples, the gap width is typically between 150 $\mu$m to 5000 $\mu$m. Accordingly, the first magnesium oxide filler fraction A may have volume top cut particle size $d_{98}$ between 50 and 1670 $\mu$m.

To facilitate the dispersion and/or to further improve the processability of the thermally conductive magnesium oxide blend, in some embodiments, the magnesium oxide fillers may be surface-treated, for example, with silanes, fatty acids, alkylated succinic anhydrides, or paraffin oil. Furthermore, it was found that the surface-treatment of the fillers may reduce the moisture pick-up susceptibility of the magnesium oxide filler and/or may reduce or prevent the conversion of magnesium oxide into brucite and/or may reduce the viscosity of a polymeric composition comprising the thermally conductive magnesium oxide blend.

According to one embodiment, the magnesium oxide filler particles are at least partially surface-treated with a surface-treatment agent, preferably the surface-treatment agent is selected from the group consisting of aliphatic carboxylic acid having a total amount of carbon atoms from C4 to C24, mono-substituted succinic anhydride consisting of succinic anhydride mono-substituted with a group selected from a linear, branched, aliphatic and cyclic group having a total amount of carbon atoms from C2 to C30 in the substituent, phosphoric acid ester blend of one or more phosphoric acid mono-ester and one or more phosphoric di-ester, paraffin oil, a silane, organic titanate, organic zirconate, and mixtures thereof, more preferably the surface-treatment agent is selected from the group consisting of aliphatic carboxylic acids having a total amount of carbon atoms from C4 to C24, triethoxysilane, trimethoxysilane, and mixtures thereof, and most preferably the surface-treatment agent is selected from a mixture of stearic acid and palmitic acid and/or hexadecyltrimethoxysilane. However, any other suitable surface-treatment agent known to the skilled person may also be used.

According to one embodiment, the magnesium oxide filler particles is surface-treated with one or more fatty acids, preferably aliphatic carboxylic acids having a total amount of carbon atoms from C4 to C24, and most preferably a mixture of stearic acid and palmitic acid. According to another embodiment, the magnesium oxide filler particles is surface-treated with a trimethoxysilane, preferably with hexadecyltrimethoxysilane. According to one embodiment, the magnesium oxide is selected from hard burned magnesia and/or dead burned magnesia, preferably dead burned magnesia, and is surface-treated with a trimethoxysilane, preferably with hexadecyltrimethoxysilane.

The inventors surprisingly found that the inventive thermally conductive magnesium blend provides efficient packing of the filler particles within polymeric compositions, and can therefore be incorporated in a high concentration into polymeric formulations while maintaining a processable viscosity of the polymer-filler blend. This in turn provides the possibility of producing polymeric compositions having a high thermal conductivity. One advantage of the present invention is that said high thermal conductivity can be obtained by using the less expensive filler material magnesium oxide, which can even be used with a lower degree of purity. It was also found that the inventive thermally conductive magnesium oxide blend exhibits a lower abrasiveness compared to conventional thermally conductive filler compositions. Furthermore, magnesium oxide can be obtained from natural resources and is non-toxic. Magnesium oxide is also not electrically conductive, which makes it most suitable for applications involving electricity such as battery assembly.

Moreover, magnesium oxide has a strong ionic bond resulting in a high melting (2500°C) and boiling point (3600°C) and making it highly resistant to heat. Therefore, magnesium oxide fillers can be processed at very high temperatures, while other conventionally used gap fillers such as aluminium trihydroxide already start to decompose at temperatures below 200°C. Accordingly, the thermally conductive magnesium oxide blend of the present invention is especially suitable for the production of polymeric compositions comprising polymers which are typically processed at temperatures above 200°C such as polyethylene and polypropylene.

The thermally conductive magnesium oxide blend of the present invention may be in dry form, preferably in form of a powder. The moisture content of the dry thermally conductive magnesium oxide blend may be less than 5.0 wt.-%, based on the total weight of the thermally conductive magnesium oxide blend, preferably less than 2.5 wt.-%, and more preferably less than 1.0 wt.-%.

According to one embodiment of the present invention, the thermally conductive magnesium oxide blend comprises of at least three different fractions of magnesium oxide filler, wherein the fillers are in form of particles having a volume median particle size $d_{50}$ from 0.1 to 500 $\mu$m. According to a further embodiment of the present invention, the thermally conductive magnesium oxide blend consists of at least three different fractions of magnesium oxide filler, wherein the fillers are in form of particles having a volume median particle size $d_{50}$ from 0.1 to 500 $\mu$m. Preferably, the thermally conductive magnesium oxide blend comprises, preferably consists, of three different fractions of magnesium oxide filler.

According to one embodiment, the thermally conductive magnesium oxide blend does not contain inorganic aluminium compounds. Examples of inorganic aluminum compounds are aluminium hydroxide, aluminium oxide, aluminium nitride, aluminium carbide, aluminium oxynitride, zirconia toughened alumina, or aluminium silicate.

**Polymeric composition**

The thermally conductive magnesium oxide blend of the present invention can be advantageously implemented in polymeric compositions. In a further aspect the present invention thus refers to a polymeric composition comprising at least one polymer and a thermally conductive magnesium oxide blend according to the present invention.

The skilled person will understand that the amount of the thermally conductive magnesium oxide blend included in the polymeric composition will depend upon a variety of factors including the amount and type of polymer, amount and type of the magnesium oxide fillers included in the thermally conductive filler composition, and the end use of the article made using the polymeric composition.

According to one embodiment the polymeric composition comprises the thermally conductive filler composition in an amount of at least 50 vol.-%, based on the total volume of the polymeric composition, preferably in an amount of at least 60 vol.-%, more preferably in an amount of at least 70 vol.-%, and most preferably in an amount of at least 80 vol.-%. According to a further embodiment the polymeric composition comprises the thermally conductive filler composition in an amount of more than 70 vol.-%, based on the total volume of the polymeric composition, preferably in an amount of more than 75 vol.-%, more preferably in an amount of more than 80 vol.-%, and most preferably in an amount of more than 85 vol.-%.

According to another embodiment the polymeric composition comprises the thermally conductive filler composition in an amount of at least 50 wt.-%, based on the total weight of the polymeric composition, preferably in an amount of at least 60 wt.-%, more preferably in an amount of at least 70 wt.-%, and most preferably in an amount of at least 80 wt.-%. According to a further embodiment the polymeric composition comprises the thermally conductive filler composition in an amount of more than 70 wt.-%, based on the total weight of the polymeric composition, preferably in an amount of more than 75 wt.-%, more preferably in an amount of more than 80 wt.-%, and most preferably in an amount of more than 85 wt.-%.

The at least one polymer may comprise any suitable polymer known in the art. For example, the at least one polymer may comprise homopolymers, copolymers, such as, for example, block, graft, random and alternating copolymers, heterophasic copolymers and random heterophasic copolymers as well as polymer blends, modifications, or mixtures thereof. The at least one polymer can also comprise recycled polymer materials. The content of recycled polymers in the at least one polymer may be in the range from 0.01 to 100 wt.%, based on the total weight of the at least one polymer.

The expression "at least one" polymer means that one or more types of polymer may be present in the inventive polymer composition. According to one embodiment the at least one polymer may be a single polymer. According to another embodiment that the at least one polymer may be a mixture of two or more types of polymers.

According to one embodiment, the at least one polymer is selected from a resin, a thermoplastic polymer, an elastomer, or a mixture thereof.

Examples of suitable resins are an epoxy resin, an acrylic resin, an urethane resin, a silicone resin, or a phenolic resin.

Examples of suitable elastomers are acrylic rubber, butadiene rubber, acrylonitrile-butadiene rubber, epichlorohydrin rubber, isoprene rubber, ethylene-propylene rubber, ethylene-propylene-diene rubber, nitrile-butadiene rubber, butyl rubber, styrene-butadiene rubber, polyisoprene, hydrogenated nitrile-butadiene rubber, carboxylated nitrile-butadiene rubber, chloroprene rubber, isoprene isobutylene rubber, chloro-isobutene-isoprene rubber, brominated isobutene-isoprene rubber, silicone rubber, fluorocarbon rubber, polyurethane rubber, polysulfide rubber, or thermoplastic rubber.

Preferably said at least one polymer may be selected from at least one thermoplastic polymer. Such thermoplastic polymers suitable for the present invention may comprise without being limited to:

- Polymers from olefins and diolefins, for example, polyethylenes (LDPE, LLDPE, VLDPE, ULDPE, MDPE, HDPE, UHMWPE), polypropylene, polybutylene, polyisobutylene, poly-4-methyl-pentene-1, polybutadiene, polyisoprene, polycyclooctene, as well random or block copolymers, such as ethylene/but-1-ene copolymers, ethylene-hexene copolymers, ethylene-methylpentene copolymers, ethylene-octene copolymers, polypropylene-polyethylene (EP), EPM, EPDM, ethylene-vinylacetate (EVA), and ethylene-acrylic ester copolymers,
- Polystyrene, polymethylstyrene, styrene-butadiene copolymers (SB), styrene-butadiene-styrene (SBS) and its hydrogenated polymer (SEBS), styrene-isoprene, styrene-isoprene-styrene (SIS), styrene-butadiene-acrylonitrile (ABS), styrene-acrylonitrile-acrylate (ASA), styrene-maleic anhydride, and grafted polymers, for example, styrene-grafted butadiene, maleic acid anhydride-grafted SBS, or grafted polymers from methylmethacrylate, styrene-butadiene and ABS (MABS),
- Halogen containing polymers such as polyvinylchloride, polychloroprene, polyvinylidene chloride, chlorinated polyethylene, or polytetrafluoroethylene,
- Polymers from unsaturated esters such as polyacrylates, or polymethacrylates, for example, polymethylmethacrylate, polyacrylonitrile, polyacrylamide, polybutylacrylate,
- Polymers derived from unsaturated alcohols such as polyvinylalcohol, polyvinylacetate, or polyvinylbutyral (PVB),
- Polyacetales, for example, polyoxymethylene and copolymers thereof,
- Polyphenylene oxide as well as polystyrene or polyamide blends thereof,
- Polyurethanes (PU), for example, linear polyurethanes (TPU),
- Polyamides (PA), such as PA-6, PA-6.6, PA-6.10, PA-4.6, PA-4.10, PA-6.12, PA-12.12, PA-11, PA-12 as well as partially aromatic polyamides (e.g. polyphthalamides),
- Polyimides, polyamidimides, polyetherimides, polyketones, polysulphones, polyethersulphones, and polyphenylensulphides,
- Polyethyleneterephthalate (PET), polybutyleneterephthalate (PBT), polypropyleneterephthalate, polyethylenenaphthylate,
- Polycarbonates,
- Cellulose derivatives, such as cellulose nitrate, cellulose acetate, or cellulose propionate,
- Partially or fully bio-based polymers derived from renewable biomass sources, such as vegetable fats and oils, corn starch, pea starch, or microbiota, aliphatic biopolyesters, such as polyhydroxyalkanoates (PHA), polyhydroxybutyrate (PHB), polyhydroxyvalerate (PHV), polyhydroxyhexanoate (PHH), or polyesters such as polylactic acid (PLA),
- Blends, mixtures, alloys and combinations comprising at least one of the above polymers.

According to one embodiment, the at least one polymer is a thermoplastic polymer being selected from the group consisting of homopolymers and/or copolymers of polyolefins, polyamides, polystyrenes, polyacrylates, polyvinyls, polyurethanes, halogen-containing polymers, polyesters, polycarbonates, and mixtures thereof.

According to one embodiment, the at least one polymer is a polyolefin being selected from the group of homo- and/or copolymers of polyethylene, homo- and/ or copolymers of polypropylene, homo- and/or copolymers of polybutylene, or mixtures thereof. According to another embodiment, the at least one polymer is a polyolefin comprising a polyethylene, a polypropylene, a polybutylene, or mixtures thereof. For example, the at least one polymer may be selected from the group comprising low density polyethylene (LDPE), linear low density polyethylene (LLDPE), high density polyethylene (HDPE), polypropylene (PP) such as polypropylene homopolymers, random polypropylene, heterophasic polypropylene or block copolymers including polypropylene units, polystyrene (PS), high impact polystyrene (HI-PS), and polyacrylate.

According to one embodiment the at least one polymer is a resin, a thermoplastic polymer, an elastomer, or a mixture thereof, preferably the at least one polymer is selected from the group consisting of an epoxy resin, an acrylic resin, an urethane resin, a silicone resin, a phenolic resin, homopolymer and/or copolymer of polyolefin, polyamide, polystyrene, polyacrylate, polyvinyl, polyurethane, silane-modified polymer, halogen-containing polymer, polyester, polycarbonate, acrylic rubber, butadiene rubber, acrylonitrile-butadiene rubber, epichlorohydrin rubber, isoprene rubber, ethylene-propylene rubber, ethylene-propylene-diene rubber, nitrile-butadiene rubber, butyl rubber, styrene-butadiene rubber, polyisoprene, hydrogenated nitrile-butadiene rubber, carboxylated nitrile-butadiene rubber, chloroprene rubber, isoprene isobutylene rubber, chloro-isobutene-isoprene rubber, brominated isobutene-isoprene rubber, silicone rubber, fluorocarbon rubber, polyurethane rubber, polysulfide rubber, thermoplastic rubber, and mixtures thereof.

Methods for blending the at least one polymer and the thermally conductive magnesium oxide blend are not particularly limited and known in the art. For example, the at least one polymer can be combined with the thermally conductive magnesium oxide blend and optional other components and blended and intimately mixed using conventional mixing techniques or processed in several different ways, e.g. by melt blending or solution blending.

According to one embodiment, the polymeric composition is produced by melt blending the at least one polymer and the thermally conductive magnesium oxide blend. Melt blending involves the use of shear force, extensional force, compressive force, ultrasonic energy, electromagnetic energy, thermal energy or combinations comprising at least one of the foregoing forces or forms of energy and is conducted in processing equipment, wherein the aforementioned forces or forms of energy are exerted by a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, or combinations comprising at least one of the foregoing. Melt blending involving the aforementioned forces may be conducted in machines such as single or multiple screw extruders, Buss kneader, Henschel, helicones, Ross mixer, Banbury, roll mills, molding machines such as injection molding machines, vacuum forming machines, blow molding machine, or the like, or combinations comprising at least one of the foregoing machines.

Alternatively, the at least one polymer is provided in powder form, in pellet form, sheet form, or the like, may be first dry blended with the thermally conductive magnesium oxide blend in a Henschel or in a roll mill, prior to being fed into a melt blending device such as an extruder or Buss kneader. The thermally conductive magnesium oxide blend may be also introduced into the melt blending device in the form of a masterbatch. In such a process, the masterbatch may be introduced into the melt blending device downstream of the point where the at least one polymer is introduced.

The at least one polymer and the thermally conductive magnesium oxide blend can also be mixed by grinding, stirring, milling, or tumbling, and may be subjected to multiple blending and forming steps. For example, the moldable composition may first be extruded and formed into pellets. The pellets may then be fed into a molding machine where it may be formed into any desirable shape or product.

Alternatively, solution blending may be used to produce the polymeric composition according to the present invention. The solution blending may also use additional energy such as shear, compression, ultrasonic vibration, or the like, to promote homogenization of the thermally conductive magnesium oxide blend within the at least one polymer.

According to one embodiment the polymeric composition is a thermally conductive masterbatch, a thermally conductive grease, a thermally conductive moldable composition, a thermally conductive extrudable composition, a thermally conductive gap filler, a thermally conductive adhesive, a thermally conductive gel, a thermally conductive potting compound, a thermally conductive encapsulation agent, a thermally conductive sealant, or a thermally conductive paste, preferably the polymeric composition is a thermally conductive gap filler, a thermally conductive adhesive, or a thermally conductive sealant.

According to one embodiment, the polymeric composition has a thermal conductivity of at least 0.75 W/m·K, preferably at least 1 W/m·K, more preferably at least 1.2 W/m·K, and most preferably at least 1.5 W/m·K, wherein the thermal conductivity is determined with a Hot Disk TPS 1000 thermal constants analyser equipped with a Kapton-insulated sensor with 2 mm radius.

The magnesium oxide blend of the present invention is "thermally conductive", i.e. it is able to conduct heat. Depending on the morphology, purity, and moisture content, magnesium oxide may have a thermal conductivity between 30 and 70 W/m K. Dead burned magnesium oxide, for example, may have typically a thermal conductivity between 50 and 70 W/m K. The magnesium oxide blend of the present invention is selected such that the desired level of thermal conductivity of the polymeric composition is provided. For example, the desired thermal conductivity may be obtained by adjusting the concentration of the magnesium oxide blend in the polymeric composition and/or by increasing the packing density of the magnesium oxide blend. The thermal conductivity of the polymeric composition comprising at least one polymer and a thermally conductive magnesium oxide blend according to the present invention may be measured by any suitable method known to the skilled person and is expressed in W/m K.

The polymeric composition of the present invention may be employed in a variety of applications, for example, aerospace applications, automotive applications, railway applications, maritime applications, electronic applications, electric vehicle applications, battery applications, or medical applications.

According to a further aspect of the present invention, use of a thermally conductive magnesium oxide blend according to the present invention in aerospace applications, automotive applications, railway applications, maritime applications, electronic applications, electric vehicle applications, battery applications, or medical applications is provided. Preferably, the thermally conductive filler composition according to the present invention may be used in automotive applications, and more preferably in automotive power electrical applications. For example, the thermally conductive filler composition according to the present invention may be used in gap fillers for battery modules or battery cells for electric vehicles. According to another preferred embodiment, the thermally conductive filler composition according to the present invention is used in battery applications, and more preferably in home battery banks and/or battery management systems. For example, the thermally conductive filler composition according to the present invention may be used in gap fillers for home battery banks and/or battery management systems. As noted above, the particle size distribution of the inventive thermally conductive filler composition, and in particular its volume top cut particle size $d_{98}$ can be adapted to the gap size, which may improve the efficiency of the heat dissipation.

According to a further aspect of the present invention, an article comprising the polymeric composition according to the present invention is provided, wherein the article is an electrical component, an electronic component, an automotive component, an aerospace component, a railway component, a maritime component, a medical component, a heat dissipating device, or a non-woven material, preferably an automotive power electrical component, an aerospace power electrical component, a railway power electrical component, a maritime power electrical component, a home energy storage device, a battery, a battery cell, a battery module, an integrated circuit, a light emitting diode, a lamp socket, a semiconductor package, a cooling fan, a connector, a switch, a case, a housing, an adhesive tape, an adhesive pad, an adhesive sheet, a vibration damping article, a gasket, a spacer, a sealant, a heat sink, or a heat spreader.

According to one embodiment, the article is a battery module comprising a plurality of battery cells connected to a base plate by a layer of a thermally conductive gap filler comprising the thermally conductive magnesium oxide blend of the present invention.

According to still a further aspect, use of a thermally conductive magnesium oxide blend according to the present invention as a thermal conductivity enhancer for a polymeric composition is provided. According to one embodiment, the thermal conductivity of the polymeric composition is increased by at least 4% compared to a polymeric composition comprising only one fraction of a magnesium oxide filler, preferably by at least 6%, more preferably at least 8%, and most preferably at least 10%.

According to one embodiment, a method for enhancing thermal conductivity of a polymeric composition is provided, wherein a thermally conductive filler magnesium oxide blend according to the present invention is added to a polymeric composition.

**Further components**

According to one embodiment the polymeric composition comprises one or more additives which are well known to the skilled person. Such additives comprise, without being limited to, UV-absorbers, light stabilizers, processing stabilizers, antioxidants, heat stabilizers, nucleating agents, metal deactivators, impact modifiers, plasticizers, lubricants, rheology modifiers, processing aids, pigments, dyes, optical brighteners, antimicrobials, antistatic agents, slip agents, anti-block agents, coupling agents, dispersants, compatibilizers, oxygen scavengers, acid scavengers, markers, antifogging agents, surface modifiers, flame retardants, blowing agents, smoke suppressors, reinforcement agents, such as glass fibres, carbon fibres and/or glass bubbles, or mixtures of the foregoing additives. The amount of additives will depend on the envisaged application area and may be in a range from 0 to 20 wt.-%, based on the total weight of the polymeric composition.

The polymeric composition may comprise at least one additional filler, which may be selected from any suitable filler known in the art. According to one embodiment the at least one additional filler is selected from the group consisting of calcium carbonate, calcium oxide, calcium hydroxide, aluminium hydroxide, aluminium oxide, aluminium nitride, talc, zinc oxide, boron nitride, graphite, metallic fillers, and mixtures thereof, preferably the at least one additional filler is selected from the group consisting of calcium carbonate, calcium oxide, calcium hydroxide, zinc oxide, boron nitride, graphite, metallic fillers, and mixtures thereof, more preferably the at least one additional filler is selected from the group consisting of calcium carbonate, calcium oxide, calcium hydroxide, and mixtures thereof, and most preferably the at least one additional filler is calcium carbonate. Examples of metallic fillers are particles of metals selected from the group consisting of aluminium, copper, nickel, tin, silver, iron, alloys thereof, and mixtures thereof. According to one embodiment, the calcium carbonate is selected from ground calcium carbonate (GCC), precipitated calcium carbonate (PCC), surface-reacted calcium carbonate, and mixtures thereof. Surface-reacted calcium carbonate is a reaction product of natural ground calcium carbonate or precipitated calcium carbonate with carbon dioxide and one or more $H_3O^+$ ion donors, wherein the carbon dioxide is formed in situ by the $H_3O^+$ ion donors treatment and/or is supplied from an external source. Further details about the preparation of the surface-reacted calcium carbonate are disclosed, for example, in WO0039222 A1, WO2004083316 A1, WO2005121257 A2, WO2009074492 A1, EP2264108 A1, EP2264109 A1, US20040020410 A1, and WO2009074492 A1.

According to a further embodiment, the polymeric composition comprises at least one additional filler in an amount from 0.1 to 50 wt.-%, based on the total weight of the polymeric composition, more preferably in an amount from 1 to 40 wt.-%, and most preferably from 2 to 30 wt.-%.

The shape of the at least one additional filler is not specifically restricted. Examples of filler shapes encompass: spherical or rounded particles, agglomerated particles, a tubular shape, a nanotubular shape, a wire shape, a rod shape, a needle shape, a plate shape, an amorphous shape, a rugby ball shape, a hexahedral shape, or mixtures thereof.

According to one embodiment, the at least one additional filler has a spherical or rounded shape. According to one embodiment, the at least one additional filler is in form of particles having a volume median particle size $d_{50}$ from 0.1 to 500 $\mu$m, preferably from 0.5 to 450 $\mu$m, more preferably from 1 to 400 $\mu$m, even more preferably from 1.5 to 300 $\mu$m, and

most preferably from 2 to 250 $\mu$m. According to another embodiment, the at least one additional filler is in form of particles having a volume median particle size $d_{50}$ from 0.1 to 250 $\mu$m, preferably from 0.5 to 200 $\mu$m, more preferably from 1 to 150 $\mu$m, even more preferably from 1.5 to 100 $\mu$m, and most preferably from 2 to 50 $\mu$m.

According to another embodiment the at least one additional filler has a plate shape. According to one embodiment, the platelets may have an aspect ratio of at least 1:2, preferably at least 1:4, more preferably at least 1:6, and most preferably at least 1:8. The "aspect ratio" in the meaning of the present invention refers to the ratio of the longest dimension to the shortest dimension of a particle and it may be determined by using scanning electron microscopy.

The scope and interest of the invention will be better understood based on the following examples which are intended to illustrate certain embodiments of the present invention and are non-limitative.

## Examples

### 1. Materials and methods

#### 1.1. Magnesium oxide fillers

Table 1: Magnesium oxide fillers and blends used in examples (wt.-% values are based on total amount of filler, nm: not measured).

| MgO filler | $d_2$ [$\mu$m] | $d_{50}$ [$\mu$m] | $d_{90}$ [$\mu$m] | $d_{98}$ [$\mu$m] | BET [m²/g] | Density [g/cm³] | Surface treatment |
|---|---|---|---|---|---|---|---|
| MGO1 | 0.3 | 55 | 140 | 190 | <1 | 3.58 | - |
| MGO2 | 0.2 | 10 | 30 | 48 | 1.1 | 3.58 | - |
| MGO3 | 4 | 75 | 150 | 205 | <1 | 3.58 | - |
| MGO4 | 55 | 120 | 190 | 237 | <1 | 3.58 | - |
| MGO5 (Blend of 39 wt.-% MGO2, 12 wt.-% MGO3, and 39 wt.-% MGO4) | nm | 69 | nm | 170 | <1 | 3.58 | - |
| MGO6 | nm | 55 | nm | 190 | <1 | 3.58 | Stearic acid/palmitic acid(weight ratio 39:61), 0.5 wt.-% |
| MGO7 | nm | 55 | nm | 190 | <1 | 3.58 | Hexadecyltrimethoxysilane, 0.5 wt.-% |

#### 1.2. Chemicals

Plasticizer

Jayflex DINP (Exxon Mobil Chemicals) is a high molecular weight phthalate plasticizer (CAS no.: 28553-12-0).

Hybrid prepolymer

Kaneka MS Polymer® S303H (Kaneka) is a silyl-terminated polyether (STPE) used as a base resin for producing moisture cure sealants, adhesives, and coatings. It consists of a polyether polymer backbone coupled with the methyldimethoxysilane functional groups.

Catalyst

Dioctyltin diacetylacetonate, also known as dioctyltin diketonate or TIB Kat 223 (TIB) (CAS 54068-28-9) is a compound of organotin chemistry and is abbreviated to DOTK. DOTK can be used as an esterification or transesterification catalyst for crosslinking in adhesives and sealants - both in silicone-based systems (RTV silicones, silicone resins) and in silane-modified polymers, as well as with polyurethanes.

Dispersing Agent

DISPERBYK®-2157 (BYK) is a VOC- and solvent-free wetting and dispersing agent for both organic and inorganic pigments. It acts by deflocculating pigments and stabilizing them by means of steric hindrance.

Water

Tap Water. Used as the curing agent for hybrid polymers. When formulated as a one component (1C, or 1K) system, ambient humidity provides the water required for polymer condensation and curing reactions. In the present case, when added to the formulation, the water acts as in a 2 component (2C or 2K) system to force or accelerate the polymer curing reaction.

Hexadecyltrimethoxysilane.

A monomeric long-chain alkylfunctional silane (CAS no.: 16415-12-6).

## 1.3. Particle size distribution (PSD)

Volume determined median particle size $d_{50}$(vol) and the volume determined top cut particle size $d_{98}$(vol) as well as the volume particle sizes $d_{90}$(vol) and $d_{10}$(vol) may be evaluated in a dry unit using a Malvern Mastersizer 2000 or 3000 Laser Diffraction System (Malvern Instruments Plc., Great Britain). If not otherwise indicated in the following example section, the volume particle sizes were evaluated in a dry unit using a Malvern Mastersizer 2000 Laser Diffraction System (Malvern Instruments Plc., Great Britain). The $d_{50}$(vol) or $d_{98}$(vol) value indicates a diameter value such that 50% or 98% by volume, respectively, of the particles have a diameter of less than this value. The raw data obtained by the measurement was analysed using the Mie theory, with a particle refractive index of 1.74 and an absorption index of 0.1. The methods and instruments are known to the skilled person and are commonly used to determine particle size distributions of fillers and pigments. The sample was measured in dry condition without any prior treatment.

## 1.4. BET specific surface area of a material

The "specific surface area" (expressed in $m^2/g$) of a material as used throughout the present document is determined by the Brunauer Emmett Teller (BET) method with nitrogen as adsorbing gas and by use of a ASAP 2460 instrument from Micromeritics. The method is well known to the skilled person and defined in ISO 9277:2010. Samples are conditioned at 100°C under vacuum for a period of 60 min prior to measurement. The total surface area (in $m^2$) of said material can be obtained by multiplication of the specific surface area (in $m^2/g$) and the mass (in g) of the material.

## 1.5. Viscosity measurement

The rheological properties of the liquid samples were determined using an Anton Paar Physica MCR301 rheometer, equipped with a parallel plate geometry. The measurement gap was set to 1.000 mm and the temperature was controlled to 23.00 °C by mean of a Peltier bottom plate.
An increasing shear rate from 0.01 - 100 1/s was applied for 10 seconds, taking 21 viscosity readings at logarithmically determined intervals over the measurement range. The readings at 0.1, 1 and 10 1/s are reported to compare the evolution of the rheological behaviour in low to high shear environments.

## 1.6. Thermal conductivity evaluation

The thermal conductivity (expressed in W/m K) of the samples has been measured using a Hot Disk® TPS1000 from Hot Disk device equipped with a Kapton-insulated sensor with 2 mm radius (sensor nr. 7577). This device works based on the Transient Plane Source (TPS) method, an absolute technique that yields information on thermal conductivity, thermal diffusivity as well as specific heat per unit volume of the material under study, in accordance with ISO 22007-2:2015. In the measuring principle utilized by said device, a constant power was supplied to the sample via the sensor for a limited heating period. The resulting temperature increase was monitored by using the sensor also as a resistance thermometer. Both thermal conductivity and thermal diffusivity values were eventually determined from the analysis of the variation of the sensor resistance.
For the sample analysis, the Hot Disk sensor was placed between the plane surfaces of two sample pieces of the compound under investigation. The sample pieces were firmly clamped around the sensor to avoid any possible air gap between the two sample pieces and the sensor. The sample was let to condition at room temperature (ca. 24°C) for 30 minutes before recording a measurement (bulk type, isotropic measurement). Then, the sensor was placed at another sample location. This measurement procedure was repeated on 5 different sample spots. The average thermal properties were then calculated.

### 1.7. Moisture pick-up susceptibility measurement

The moisture pick-up susceptibility of a material was determined with a GraviTest 6300 device from Gintronic. This equipment was used to measure the capacity of a solid material in powder form to increase in weight as a response to atmospheric humidity, using two distinct methods as described in the following:

Method 1

The sample was first kept at 23°C in a controlled atmosphere at 10% relative humidity (RH) for 200 minutes, then the RH was increased stepwise to 85%. 200 minutes steps were made at 30% RH, 50% RH and 70% RH, before reaching 85% RH which was maintained for a further 200 minutes. RH was then decreased from 85% RH to 10% RH in 200 minutes steps, stopping at 70% RH, 50% RH and 30% RH before reaching 10% RH again. The moisture pick-up determined by this method is reported in mg weight gain/g of sample.

Method 2

The moisture pick-up susceptibility was determined after exposure to an atmosphere of 10 and 85% RH. Initially the samples were held for 4 hours at a temperature of +23°C ($\pm$ 2°C) and at 10% RH. While the temperature remained constant, the humidity was increased to and held at 85% RH for 500 hours, before being returned to 10% RH for a further 50 hours. The weight increase of the samples between the initial and final segments at 10% RH was then used to calculate an indication of irreversible weight gain of the sample over time, which is assumed to be due to the conversion of magnesium oxide to magnesium hydroxide. The moisture pick-up determined by this method is reported in mg weight gain/g of sample.

### 1.8. Mechanical property measurement

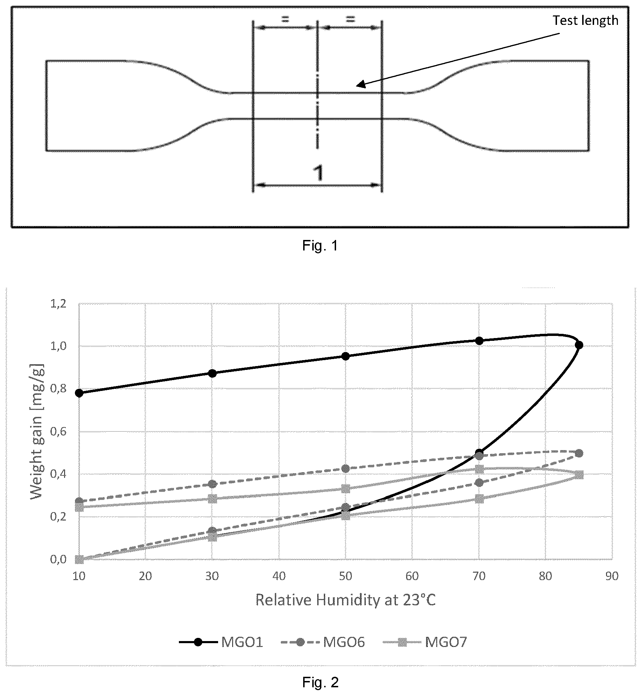

Mechanical properties were measured in accordance with ISO 37:2011 - *Rubber, vulcanized or thermoplastic - Determination of tensile stress-strain properties,* using a Zwick Z030 test bench (ZwickRoell GmbH & Co. KG, Germany). The test pieces were cut using a calibrated die and hand operated NAEF punch press (NAEF Press & Dies, U.S.A.) to create dumb-bell samples as shown in Fig. 1, and of dimensions suitable to create test pieces of Type 2 as described in Table 2 (the test length should not exceed the length of the narrow portion of the test piece).

Table 2: Test Length of dumb-bells.

| Type of test piece | Type 1 | Type 1A | Type 2 | Type 3 | Type 4 |
|---|---|---|---|---|---|
| Test length "1" [mm] | 25 $\pm$ 0.5 | 20 $\pm$ 0.5 | 20 $\pm$ 0.5 | 10 $\pm$ 0.5 | 10 $\pm$ 0.5 |

The only deviation from the ISO standard was related to the reload, which was not set at 0.1 MPa, but rather at 0.65 N, which is the equivalent preload for of 0.1 MPa for a 2 mm thick sample. For certain samples indicated in the Examples section below, this preload was further reduced to 0.3 N to improve data quality.

The tested mechanical properties were the elongation expressed in percent, which is a measure of deformation that occurs before the material eventually breaks when subjected to a tensile load, and the tensile strength expressed in MPa, which is the maximum mechanical tensile stress with which a sample can be loaded before the material fails and ultimately tears and/or breaks.

### 2. Preparation of polymeric formulations

Polymeric formulations were prepared in accordance with the formulations shown in Table 3 below. Defined quantities of plasticizer and polyol, and if present, dispersing agent, were added to a SpeedMixer polypropylene cup. After this, magnesium oxide was added on top of the liquid components and the contents of the cup were lightly stirred using a wooden spatula. The cup was then placed into a SpeedMixer SMART DAC 600.4 VAC-P LR HV (Hauschild GmbH & Co KG, Germany) and mixed at 500 rpm during 30 seconds without operation of the vacuum pump, before being subsequently mixed at 1100 rpm for 60s at a pressure of 250 mbar. The cup was then allowed to cool to room temperature and the dispersion evaluated by use of a wooden spatula.

Subsequently, catalyst and water were added to the cup and the cup was placed into the Speed Mixer before being mixed at 1100 rpm for around 40 seconds until a pressure of >100 mbar was attained. The mixer was then stopped and the sample removed.

Table 3: Formulations used to produce samples for thermal conductivity measurements (comp.: comparative, amounts are given in parts by weight).

| Component | F1 (comp.) | F2 (comp.) | F3 (comp.) | F4 (comp.) | F5 | F6 (comp.) | F7 (comp.) | F8 (comp.) |
|---|---|---|---|---|---|---|---|---|
| Hybrid prepolymer | 5.61 | 5.61 | 5.61 | 5.61 | 5.61 | 5.80 | 5.61 | 3.00 |
| Plasticizer | 12.83 | 12.83 | 12.83 | 12.83 | 12.83 | 13.00 | 12.83 | 7.00 |
| Catalyst | 0.29 | 0.29 | 0.29 | 0.29 | 0.29 | 0.1 | 0.29 | 0.25 |
| Water | 0.29 | 0.29 | 0.29 | 0.29 | 0.29 | 0.1 | 0.29 | 0.25 |
| Dispersing agent | -- | -- | -- | -- | -- | 1.0 | -- | 1.5 |
| MGO1 | 81.0 | -- | -- | -- | -- | -- | -- | -- |
| MGO2 | -- | 81.0 | -- | -- | -- | -- | -- | -- |
| MGO3 | -- | -- | 81.0 | -- | -- | -- | -- | -- |
| MGO4 | -- | -- | -- | 81.0 | -- | -- | -- | -- |
| MGO5 | -- | -- | -- | -- | 81.0 | -- | -- | -- |
| MGO6 | -- | -- | -- | -- | -- | 81.0 | -- | 88.0 |
| MGO7 | -- | -- | -- | -- | -- | -- | 81.0 | -- |

### 3. Preparation of surface-treated magnesium oxide (MGO6, MGO7)

Two surface-treated magnesium oxides have been prepared by treating magnesium oxide with a surface-treatment agent (blend of stearic acid and palmitic acid; weight ratio 39:61) and hexadecyltrimethoxysilane, respectively.

2 kg of magnesium oxide (dead burned magnesium oxide) were placed in a 2.5 L mixer vessel (Somakon MP-LB Mixer, Somakon Verfahrenstechnik, Germany), and conditioned by stirring for 5 minutes (700 rpm, 120°C). After that time, 0.5 parts by weight, relative to 100 parts by weight of untreated magnesium oxide, of surface-treatment agent were added slowly to the mixture. Stirring and heating were then continued for another 15 minutes (120°C, 700 rpm). After that time, the mixture was allowed to cool and the treated powder was collected.

The moisture pick-up susceptibility was determined according to method 1 as described in section 1.7. above.

The weight increase of the samples between 10 and 85% relative humidity was then used to calculate an indication of the tendency of the material to "pick-up" moisture. The moisture pick-up susceptibility is reported in mg weight gain/g of sample.

The moisture pick-up susceptibility of three samples was analysed:

- Dead burned magnesium oxide (MGO1)
- 0.5% Stearic/palmitic acid surface-treated, dead burned magnesium oxide (MGO6)
- 0.5 Hexadecyltrimethoxysilane surface-treated, dead burned magnesium oxide (MGO7) and is shown in Fig. 2.

The non-treated magnesium oxide (MGO1) sample had a moisture pick-up susceptibility of about1 mg/g at 85% of RH; this value was drastically decreased by the presence of the surface-treatment agent, irrespective of the treatment agent used. There was only little difference between the surface-treated magnesium oxide fillers MGO6 and MGO7, where both show a small increase in weight during the high humidity phase, and a slight reduction during the low humidity phase. It was also noticed that when relative humidity was decreased from 85% RH to 10% RH, the sample weight was decreased by 23% in the non-treated sample. In contrast, in the cases of the surface-treated magnesium oxide, the sample weight decreased by 38-45% indicating a quicker loss of absorbed moisture from the surface of the treated material.

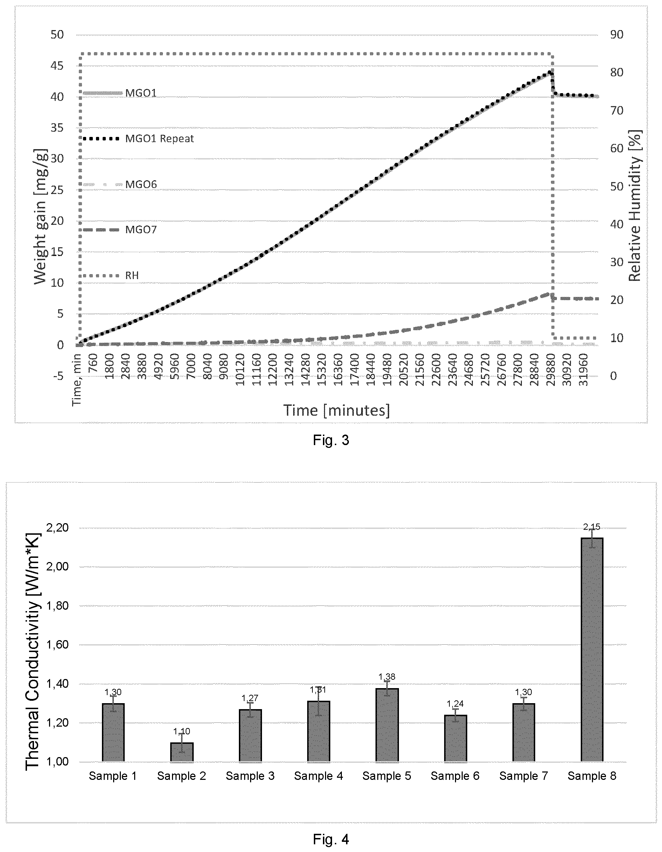

Furthermore, the non-treated and surface-treated MgO fillers were tested according to method 2 for evaluating moisture pick-up or water adsorption onto the surface of the filler as described in section 1.7. above and shown in Fig. 3.

The MGO1 sample increased in weight as a response to exposure to 85% RH. Once the humidity was dropped to 10% RH, the sample also lost some of the increased weight, however it appeared that most of the increase in weight was irreversible. It is assumed that the increase in weight was conversion from magnesium oxide to magnesium hydroxide according to the following equation (MgO + $H_2O \rightarrow$ Mg(OH)$_2$). After 500 hours the MGO1 sample still appeared to be linearly increasing in weight indicating that the conversion to magnesium hydroxide was still continuing. The MGO1 sample was measured twice according to this method and the weight gain was almost identical indicating good repeatability of test method.

Moreover, it appeared the alkyl silane surface treatment loses effectiveness after a certain time. Sample MGO7 (hexadecyltrimethoxysilane surface-treated magnesium oxide) started increasing in weight for around 1500 h. After this there was a linear increase although at a much slower rate than for the non-treated sample.

The lowest weight increase of all samples was observed for the stearic acid surface-treated magnesium oxide sample MGO6, which remained stable from the start and did not appreciably increase in weight.

### 4. Examples

### 4.1. Example 1 - **Thermal conductivity**

Polymeric compositions were prepared according to the formulations shown in Table 3 and the method described in section 2. above. Immediately after the production of the polymeric formulation the sample in the polypropylene SpeedMixer cup was removed from the SpeedMixer. A metal or plastic lid of approximately 100 mm diameter with a depth of around 10 mm was placed onto the laboratory bench, and the sample was taken and poured into the lid, until the lid was full. The exact dimensions of the sample were not of importance, however, the measurement of thermal conductivity using the Hot Disk method required a sample that was bigger than the sensor, i.e. the dimensions of the sample should exceed 8 mm (lateral size) and 2 mm (thickness). The results are compiled in Table 4 below.

Table 4: Thermal conductivity of prepared polymeric compositions (wt.-% are based on total weight of the thermally conductive filler composition, comp.: comparative).

| Sample | Formulation | Filler | Filler loading [wt.-%] | Thermal Conductivity [W/m·K] |
|---|---|---|---|---|
| 1 (comp.) | F1 | MGO1 | 81 | 1.30 ± 0.04 |
| 2 (comp.) | F2 | MGO2 | 81 | 1.10 ± 0.05 |
| 3 (comp.) | F3 | MGO3 | 81 | 1.27 ± 0.04 |
| 4 (comp.) | F4 | MGO4 | 81 | 1.31 ± 0.07 |
| 5 | F5 | MGO5 | 81 | 1.38 ± 0.04 |
| 6 (comp.) | F6 | MGO6 | 81 | 1.24 ± 0.03 |
| 7 (comp.) | F7 | MGO7 | 81 | 1.30 ± 0.03 |
| 8 (comp.) | F8 | MGO6 | 88 | 2.15 ± 0.05 |

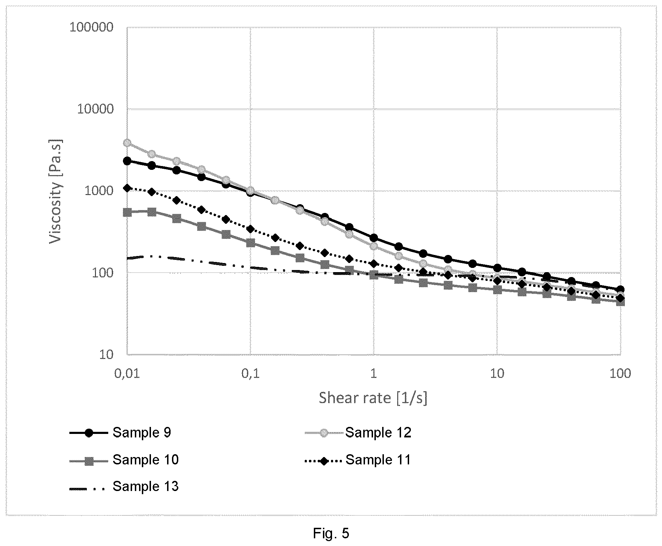

It can be gathered from Fig. 4 and Fig. 5 that the polymeric composition including the inventive magnesium oxide blend (Sample 5) shows the highest thermal conductivity and a viscosity in a processable range. Using a surface-treated filler allows the viscosity of the polymeric composition to be reduced (see Table 6 below and Fig. 5) and, therefore, the filler loading to be increased up to, e.g. 88 wt.-%, resulting in an expected improvement of the thermal conductivity (see sample 8 vs. sample 6).

### 4.2. Example 2 - **Rheology**

Non-cured polymeric formulations were prepared by replacing the catalyst and water with hybrid polymer and plasticizer and keeping the solids content the same. All samples were measured within 1 hour of production according to the procedure outlined in section 2.3 and using the Peltier control element to ensure measurements were carried out at 23°C. The formulations tested and the viscosities are compiled in Tables 5 and 6 below, and the rheology plots are shown in Fig. 5.

Table 5: Polymeric formulations used for rheological profiling (comp.: comparative, amounts are given in parts by weight).

| Component | Sample 9 (comp.) | Sample 10 (comp.) | Sample 11 (comp.) | Sample 12 | Sample 13 (comp.) |
|---|---|---|---|---|---|
| Hybrid prepolymer | 6.0 | 6.0 | 6.0 | 6.0 | 6.0 |

(continued)

| Component | Sample 9 (comp.) | Sample 10 (comp.) | Sample 11 (comp.) | Sample 12 | Sample 13 (comp.) |
|---|---|---|---|---|---|
| Plasticizer | 13.0 | 13.0 | 13.0 | 13.0 | 12.0 |
| Dispersing agent | -- | -- | -- | -- | 1.0 |
| MgO1 | 81.0 | -- | -- | -- | 81.0 |
| MgO5 | -- | -- | -- | 81.0 | -- |
| MgO6 | -- | 81.0 | -- | -- | -- |
| MgO7 | -- | -- | 81.0 | -- | -- |

Table 6: Measured viscosities of the polymeric formulations of Table 5 (comp.: comparative).

| Component | Sample 9 (comp.) | Sample 10 (comp.) | Sample 11 (comp.) | Sample 12 | Sample 13 (comp.) |
|---|---|---|---|---|---|
| Viscosity at 0.1 s$^{-1}$ [Pa.s] | 960 | 234 | 345 | 1018 | 150 |
| Viscosity at 1 s$^{-1}$ [Pa.s] | 270 | 94 | 129 | 212 | 119 |
| Viscosity at 10 s$^{-1}$ [Pa.s] | 115 | 63 | 80 | 87 | 110 |

Here it can be seen that there is a similar low shear viscosity for both comparative sample 9 (including MGO1) and the inventive sample 12 (including MGO5), while a slightly lower high shear viscosity indicates better extrudability for the polymeric composition containing the inventive magnesium blend (sample 12). Comparative samples 10 and 11 including the surface-treated magnesium oxide fillers show a significant reduction in all reported viscosities compared to sample 9. Using a dispersant (comparative sample 13, MGO1 + dispersing agent) significantly reduces the low shear viscosity which allows for higher addition of filler as someone skilled in the production of adhesive and sealants would expect. It is of note, however, that the use of dispersant does not lower the high shear viscosity to the same extent as using a surface-treated MgO.

### 4.3. Example 3 - Mechanical properties

Polymeric compositions were prepared according to the formulations shown in Table 3 and the method described in section 2. above. The obtained compositions were poured along a moulded Teflon plate with a 2 mm indentation running along the length of the plate. A glass microscope slide was then taken and was drawn along the top of the groove, ensuring that the polymeric formulation filled the groove and resulted in a smooth upper surface. The resulting plate with a polymeric film of approximately 2 mm thickness x 3 cm width x 30 cm length was allowed to cure at ISO standard temperature and humidity conditions of 23 $\pm$ 2 °C and 50 $\pm$ 5% RH, for at least 48 hours before handling and at least 7 days before dumb-bell preparation and measurement.

The tensile strength and elongation of the inventive sample 17 was very similar to that of the comparative sample 14 and the differences can be considered to be within the measurement error of the method. The tensile strength and elongation of the polymeric samples prepared with the surface-treated fillers MGO6 and MGO7, respectively, dropped significantly, and the tensile strength of sample 15 was below the 0.65 N preload setting of the Zwick test bench. For this sample, in order to produce a meaningful result, the preload was reduced to 0.3 N which allowed for a measurement to be made. The results are presented in Table 7 below.

Table 7: ISO 37 mechanical property testing.

| ISO 37 | Sample 14 (comp.) | Sample 15 (comp.) | Sample 16 (comp.) | Sample 17 |
|---|---|---|---|---|
| Formulation | F1 | F6 | F7 | F5 |
| Filler | MGO1 | MGO6 | MGO7 | MGO5 |
| Tensile strength [MPa] | 0.6 | 0.1 | 0.3 | 0.6 |
| Elongation [%] | 97 | 63 | 66 | 99 |
| Preload [N] | 0.65 | 0.3 | 0.65 | 0.65 |

**Claims**

1. A thermally conductive magnesium oxide blend,
   which is composed of at least three different fractions of magnesium oxide fillers,
   wherein the fillers are in form of particles having a volume median particle size $d_{50}$ from 0.1 to 500 μm.

2. The thermally conductive magnesium oxide blend of claim 1, wherein the magnesium oxide blend comprises

   a first magnesium oxide filler fraction A having a volume median particle size $d_{50}(A)$,
   a second magnesium oxide filler fraction B having a volume median particle size $d_{50}(B)$, and
   a third magnesium oxide filler fraction C having a volume median particle size $d_{50}(C)$,
   wherein $d_{50}(A)$ is greater than $d_{50}(B)$, and $d_{50}(A)$ differs from $d_{50}(B)$ by at least 10%, and $d_{50}(C)$ is smaller than $d_{50}(B)$, and $d_{50}(C)$ differs from $d_{50}(B)$ by at least 10%.

3. The thermally conductive magnesium oxide blend of any one of the preceding claims, wherein the filler particles of the magnesium oxide blend have an overall particle size distribution that satisfies the following equation (1):

$$U(d_x) = 100 \frac{d_x^n - d_2^n}{d_{98}^n - d_2^n} \quad (1)$$

   wherein $U(d_x)$ is the cumulative percentage of filler particles having the particle size $d_x$,
   $d_{98}$ is the top cut particle size of the filler particles,
   $d_2$ is the minimum particle size of the filler particles, and
   n = 0.3 - 0.45, preferably n = 0.34 - 0.4, more preferably n = 0.35 - 0.39, even more preferably n = 0.36 - 0.38, and most preferably n = 0.37.

4. The thermally conductive magnesium oxide blend of any one of the preceding claims, wherein the volume median particle size $d_{50}$ of the filler particles of the magnesium oxide blend satisfies the following equation (2):

$$d_{50} = \sqrt[n]{0.5(d_{98}^n - d_2^n) + d_2^n} \quad (2)$$

   wherein $d_{98}$ is the top cut particle size of the filler particles,
   $d_2$ is the minimum particle size of the filler particles, and
   n = 0.3 - 0.45, preferably n = 0.34 - 0.4, more preferably n = 0.35 - 0.39, even more preferably n = 0.36 - 0.38, and most preferably n = 0.37.

5. The thermally conductive magnesium oxide blend of any one of the preceding claims, wherein the filler particles of the magnesium oxide blend have

   a volume median particle size $d_{50}$ from 0.5 to 450 μm, preferably from 1 to 400 μm, more preferably from 1.5 to 300 μm, and most preferably from 2 to 250 μm, and/or
   a volume minimum particle size $d_2$ from 0.01 to 5 μm, preferably from 0.1 to 4 μm, more preferably from 0.5 to 3 μm, and most preferably from 1 to 2 μm, and/or
   a volume top cut particle size $d_{98}$ from 10 to 1000 μm, preferably from 50 to 750 μm, more preferably from 100 to 500 μm, and most preferably from 150 to 250 μm.

6. The thermally conductive magnesium oxide blend of any one of the preceding claims, wherein the magnesium oxide is selected from the group consisting of natural magnesium oxide, synthetic magnesium oxide, caustic calcined magnesia, hard burned magnesia, dead burned magnesia, sintered magnesia, fused magnesia, or a mixture thereof, preferably the magnesium oxide is selected from hard burned magnesia and/or dead burned magnesia, and most preferably the magnesium oxide is dead burned magnesia.

7. The thermally conductive magnesium oxide blend of any one of the preceding claims, wherein the magnesium oxide filler particles are at least partially surface-treated with a surface-treatment agent, preferably the surface-treatment agent is selected from the group consisting of aliphatic carboxylic acid having a total amount of carbon atoms from C4 to C24, mono-substituted succinic anhydride consisting of succinic anhydride mono-substituted with a group selected from a linear, branched, aliphatic and cyclic group having a total amount of carbon atoms from C2 to C30 in the substituent, phosphoric acid ester blend of one or more phosphoric acid mono-ester and one or more phosphoric di-ester, paraffin oil, a silane, organic titanate, organic zirconate, and mixtures thereof, more preferably the surface-treatment agent is selected from the group consisting of aliphatic carboxylic acids having a total amount of carbon atoms from C4 to C24, triethoxysilane, trimethoxysilane, and mixtures thereof, and most preferably the surface-treatment agent is selected from a mixture of stearic acid and palmitic acid and/or hexadecyltrimethoxysilane.

8.  The thermally conductive magnesium oxide blend of claims 2 to 7, wherein the magnesium oxide blend comprises

    the first magnesium oxide filler fraction A in an amount from 1 to 66 vol.-%, based on the total volume of the filler composition, preferably from 2 to 50 vol.-%, more preferably from 5 to 40 vol.-%, and most preferably from 10 to 35 vol.-%,
    the second magnesium oxide filler fraction B in an amount from 1 to 66 vol.-%, based on the total volume of the filler composition, preferably from 2 to 50 vol.-%, more preferably from 5 to 40 vol.-%, and most preferably from 10 to 35 vol.-%, and
    the third magnesium oxide filler fraction C in an amount from 1 to 66 vol.-%, based on the total volume of the filler composition, preferably from 2 to 50 vol.-%, more preferably from 5 to 40 vol.-%, and most preferably from 10 to 35 vol.-%.

9.  A polymeric composition comprising at least one polymer and a thermally conductive magnesium oxide blend according to any one of the preceding claims.

10. The polymeric composition of claim 9,

    wherein the polymeric composition comprises the thermally conductive magnesium oxide blend in an amount of at least 50 vol.-%, based on the total volume of the polymeric composition, preferably in an amount of at least 60 vol.-%, more preferably in an amount of at least 70 vol.-%, and most preferably in an amount of at least 80 vol.-%, and/or
    wherein the polymeric composition has a thermal conductivity of at least 0.75 W/m·K, preferably at least 1 W/m.K, more preferably at least 1.2 W/m.K, and most preferably at least 1.5 W/m K, wherein the thermal conductivity is determined with a Hot Disk TPS 1000 thermal constants analyser equipped with a Kapton-insulated sensor with 2 mm radius.

11. The polymeric composition of claim 9 or 10, wherein the at least one polymer is a resin, a thermoplastic polymer, an elastomer, or a mixture thereof, preferably the at least one polymer is selected from the group consisting of an epoxy resin, an acrylic resin, an urethane resin, a silicone resin, a phenolic resin, homopolymer and/or copolymer of polyolefin, polyamide, polystyrene, polyacrylate, polyvinyl, polyurethane, silane-modified polymer, halogen-containing polymer, polyester, polycarbonate, acrylic rubber, butadiene rubber, acrylonitrile-butadiene rubber, epichlorohydrin rubber, isoprene rubber, ethylene-propylene rubber, ethylene-propylene-diene rubber, nitrile-butadiene rubber, butyl rubber, styrene-butadiene rubber, polyisoprene, hydrogenated nitrile-butadiene rubber, carboxylated nitrile-butadiene rubber, chloroprene rubber, isoprene isobutylene rubber, chloro-isobutene-isoprene rubber, brominated isobutene-isoprene rubber, silicone rubber, fluorocarbon rubber, polyurethane rubber, polysulfide rubber, thermoplastic rubber, and mixtures thereof.

12. The polymeric composition of claims 9 to 11, wherein the polymeric composition comprises at least one additional filler, preferably selected from the group consisting of calcium carbonate, calcium oxide, calcium hydroxide, aluminium hydroxide, aluminium oxide, aluminium nitride, talc, zinc oxide, boron nitride, graphite, metallic fillers, and mixtures thereof.

13. The polymeric composition of any one of claims 9 to 12, wherein the polymeric composition is a thermally conductive masterbatch, a thermally conductive grease, a thermally conductive moldable composition, a thermally conductive extrudable composition, a thermally conductive gap filler, a thermally conductive adhesive, a thermally conductive gel, a thermally conductive potting compound, a thermally conductive encapsulation agent, a thermally conductive sealant, or a thermally conductive paste, preferably the polymeric composition is a thermally conductive gap filler, a thermally conductive adhesive, or a thermally conductive sealant.

14. An article comprising the polymeric composition of any one of claims 9 to 13, wherein the article is an electrical component, an electronic component, an automotive component, an aerospace component, a railway component, a maritime component, a medical component, a heat dissipating device, or a non-woven material, preferably an automotive power electrical component, an aerospace power electrical component, a railway power electrical component, a maritime power electrical component, a home energy storage device, a battery, a battery cell, a battery module, an integrated circuit, a light emitting diode, a lamp socket, a semiconductor package, a cooling fan, a connector, a switch, a case, a housing, an adhesive tape, an adhesive pad, an adhesive sheet, a vibration damping article, a gasket, a spacer, a sealant, a heat sink, or a heat spreader.

15. Use of a thermally conductive magnesium oxide blend according to claims 1 to 8 as a thermal conductivity enhancer for a polymeric composition.

16. Use of a thermally conductive magnesium oxide blend according to claims 1 to 8 in aerospace applications, automotive applications, railway applications, maritime applications, electronic applications, electric vehicle applications, battery applications, or medical applications.

Fig. 1

Fig. 2

Fig. 3

Fig. 4

Fig. 5

Europäisches
Patentamt
European
Patent Office
Office européen
des brevets

## EUROPEAN SEARCH REPORT

**Application Number**

EP 24 18 1742

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/222273 A1 (NISHIDA NAOTO [JP] ET AL) 4 August 2016 (2016-08-04) * the whole document * ----- | 1,2,5,6, 9,11,15 | INV. C04B26/30 |
| X | WO 2022/207633 A1 (OMYA INT AG [CH]) 6 October 2022 (2022-10-06) * the whole document * ----- | 1-16 | |

**TECHNICAL FIELDS SEARCHED (IPC)**

C04B

The present search report has been drawn up for all claims

| Place of search | Date of completion of the search | Examiner |
|---|---|---|
| Munich | 30 October 2024 | Roesky, Rainer |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...................................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 18 1742

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2024

| Patent document cited in search report | Publication date | Patent family member(s) | | Publication date |
|---|---|---|---|---|
| US 2016222273 A1 | 04-08-2016 | CN | 105579506 A | 11-05-2016 |
| | | JP | 5993824 B2 | 14-09-2016 |
| | | JP | 2015059050 A | 30-03-2015 |
| | | KR | 20160058865 A | 25-05-2016 |
| | | TW | 201514125 A | 16-04-2015 |
| | | US | 2016222273 A1 | 04-08-2016 |
| | | WO | 2015041110 A1 | 26-03-2015 |
| WO 2022207633 A1 | 06-10-2022 | AU | 2022250704 A1 | 10-08-2023 |
| | | BR | 112023014742 A2 | 03-10-2023 |
| | | CA | 3204645 A1 | 06-10-2022 |
| | | CN | 116888205 A | 13-10-2023 |
| | | CO | 2023010768 A2 | 08-09-2023 |
| | | EP | 4067424 A1 | 05-10-2022 |
| | | EP | 4314136 A1 | 07-02-2024 |
| | | JP | 2024513322 A | 25-03-2024 |
| | | KR | 20230164657 A | 04-12-2023 |
| | | US | 2024182673 A1 | 06-06-2024 |
| | | WO | 2022207633 A1 | 06-10-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004108852 A1
- WO 2021006646 A1
- WO 2022207633 A1
- EP 2447213 A1
- EP 2524898 A1
- EP 2371766 A1
- EP 1712597 A1
- EP 1712523 A1

- WO 2013142473 A1
- WO 0039222 A1
- WO 2004083316 A1
- WO 2005121257 A2
- WO 2009074492 A1
- EP 2264108 A1
- EP 2264109 A1
- US 20040020410 A1

**Non-patent literature cited in the description**

- **CUI et al.** *J. Mater. Chem. C*, 2020, vol. 8, 10568-10586
- *CHEMICAL ABSTRACTS*, 28553-12-0

- *CHEMICAL ABSTRACTS*, 54068-28-9
- *CHEMICAL ABSTRACTS*, 16415-12-6